# EUROPÄISCHE PATENTANMELDUNG

(11) **EP 3 736 756 A1**
(43) Veröffentlichungstag der Anmeldung: **11.11.2020**
(21) Anmeldenummer: 19202725.8
(22) Anmeldetag: 11.10.2019
(51) Int. Cl.: G06Q 10/08

(54) **VERFAHREN FÜR INTELLIGENTE LOGISTIKSYSTEME**

(30) Priorität: 10.05.2019 EP 19173913
(71) Anmelder: Fraunhofer-Gesellschaft zur Förderung der angewandten Forschung e.V., 80686 München (DE)
(72) Erfinder: PSIUK, Rafael, 90411 Nürnberg (DE); JAHN, Jasper, 90411 Nürnberg (DE); ZILLER, Janina, 90411 Nürnberg (DE); MÜLLER, Alfred, 90411 Nürnberg (DE); DRÄGER, Tobias, 90411 Nürnberg (DE); WORM, Johannes, 90411 Nürnberg (DE)
(74) Vertreter: 2SPL Patentanwälte PartG mbB

(57) **Zusammenfassung**

Vorgeschlagen werden Verfahren zum Einsatz induktiver Nahfeldortung in der Logistikwelt (z.B. Logistik, Lager, Montage, Produktion), um dort Abläufe effizienter und flexibler gestalten zu können. Beispielsweise wird ein Verfahren zum Bestimmen, dass ein in einem Regal gelagerter Lagerbehälter geleert wurde, vorgeschlagen. Der Lagerbehälter ist dabei mit einem RFID-Transponder versehen. Das Verfahren umfasst ein Erzeugen eines magnetischen Erregerfeldes mittels zumindest eines am Regal angebrachten Erregerelements. Ferner umfasst das Verfahren ein Bestimmen einer Mehrzahl an Messwerten für ein von dem RFID-Transponder aufgrund des magnetischen Erregerfeldes ausgeprägten magnetischen Antwortfeldes mittels einer Mehrzahl von am Regal angebrachten Sensoren. Weiterhin umfasst das Verfahren ein Bestimmen einer Position oder einer Bewegungstrajektorie des RFID-Transponders basierend auf der Mehrzahl an Messwerten. Das Verfahren umfasst zudem ein Bestimmen, dass der Lagerbehälter geleert wurde, falls die Position des RFID-Transponders sich außerhalb eines dem Regal zugeordneten Raumbereichs befindet oder die Bewegungstrajektorie eine Bewegung des RFID-Transponders aus dem dem Regal zugeordneten Raumbereich anzeigt.

## Beschreibung

### Technisches Gebiet

Ausführungsbeispiele befassen sich mit der Anwendung induktiver Nahfeldortung in der Logistikwelt (z.B. Logistik, Lager, Montage, Produktion).

### Hintergrund

In der Logistikwelt gibt es eine Vielzahl an Problemstellungen.

Eine Problemstellung ist die Erkennung von Leerbeständen. In der Lagerlogistik müssen z.B. leere Bestände in Kisten erkannt werden. Hierzu werden Kisten beispielsweise mit einem UHF-RFID (Ultra High Frequency - Radio Frequency IDentification) Transponder ausgestattet. Sobald die Kiste leer ist, wird diese bei einem speziellen UHF RFID Lesegerät abgelegt, so dass dieser den Transponder auslesen kann und über ein Back-End-System die Information über die aus dem Vorratsregal entnommene Kiste an ein zentrales Lagerverwaltungssystem weiterleitet.

Eine weitere Problemstellung ist die Kommissionierung bzw. Multikommissionierung. Traditionell erfolgt die Kommissionierung im Lagerumfeld mittels ausgedrucktem Auftrag. Hierbei hat der Kommissionierer auf einem Zettel aufgelistet, welche Artikel er aus Regalen in einem Lager herausnehmen und in einen Kommissionierbehälter einsortieren muss. Moderne Systeme können ihn hierbei unterstützen. Hauptsächlich verwendet der Kommissionierer einen Barcodescanner, mit welchem er den Barcode auf einer Kommissionierkiste scannt. Diesem Code (bzw. dieser Kiste) ist ein Kommissionierauftrag zugeordnet. Die dazugehörigen Artikel werden dem Kommissionierer digital angezeigt.

Entweder kennt der Kommissionierer den Weg zum Regal oder er nutzt ein Leitsystem dazu. Vor dem Regal muss er das richtige Fach suchen. Hierzu kann er einen Barcode am Regal scannen, so dass über ein Back-End-System das Regal den dazugehörigen Auftrag kennt und mittels Pick-by-Light (PbL) Technologien die richtigen Regalfächer aufleuchten lässt. Entnimmt der Kommissionierer nun einen Artikel aus einem Fach, muss er die Entnahme manuell durch einen Tastendruck quittieren. Alternativ gibt es optische Systeme zur Fachüberwachung.

Im Falle eines mobilen Multi-Kommissionierwagens muss der Kommissionierer mehrere Aufträge gleichzeitig kommissionieren. Hierzu hat er auf dem mobilen Wagen mehrere Kisten, deren Fachpositionen ebenfalls mit PbL Technologie ausgestattet sind. Um den Ablageort eines Artikels zu erfahren, muss der Kommissionierer den entnommenen Artikel scannen. Anschließend wird über das Back-End-System mit dem mobilen Regal kommuniziert, so dass dieses die Ablagefächer mittels PbL Technologie signalisiert. Eine Ablage muss anschließend mit Tastendruck quittiert werden.

Zudem ist der Montageplatz eines Arbeiters in der Produktion eine Problemstellung. An seinem Montagplatz hat der Arbeiter in der Regel einen Arbeitstisch, dem ein kleines Regal mit Kisten voller Montageteile (z.B. Schrauben) zugeordnet ist. Wie bei der Kommissionierung kann dem Arbeiter mittels PbL Technologie angezeigt werden, welche Teile er für den jeweiligen Montageauftrag entnehmen muss.

Vor diesem Hintergrund ist es eine Aufgabe, eine verbesserte Technologie bereitzustellen, um Abläufe effizienter und flexibler gestalten zu können.

### Zusammenfassung

Die Aufgabe wird durch die Verfahren und Gegenstände gemäß den unabhängigen Ansprüchen gelöst. Weitere Aspekte sowie Weiterbildungen der vorgeschlagenen Technologie sind in den abhängigen Ansprüchen, der folgenden Beschreibung sowie in den Figuren beschrieben.

Ein Ausführungsbeispiel betrifft ein Verfahren zum Bestimmen, ob ein in einem Regal gelagerter Lagerbehälter geleert wurde. Der Lagerbehälter ist dabei mit einem RFID-Transponder versehen. Das Verfahren umfasst ein Erzeugen eines magnetischen Erregerfeldes mittels zumindest eines am Regal angebrachten Erregerelements. Ferner umfasst das Verfahren ein Bestimmen einer Mehrzahl an Messwerten für ein von dem RFID-Transponder aufgrund des magnetischen Erregerfeldes ausgeprägten magnetischen Antwortfeldes mittels einer Mehrzahl von am Regal angebrachten Sensoren. Weiterhin umfasst das Verfahren ein Bestimmen einer Position oder einer Bewegungstrajektorie des RFID-Transponders basierend auf der Mehrzahl an Messwerten. Das Verfahren umfasst zudem ein Bestimmen, dass der Lagerbehälter geleert wurde, falls die Position des RFID-Transponders sich außerhalb eines dem Regal zugeordneten Raumbereichs befindet oder die Bewegungstrajektorie eine Bewegung des RFID-Transponders aus dem dem Regal zugeordneten Raumbereich anzeigt.

Ein weiteres Ausführungsbeispiel betrifft ein Verfahren zum Bestätigen, dass von einem Kommissionierer ein zu entnehmendes Objekt aus einem Regal entnommen wurde. Der Kommissionierer trägt dabei ein Wearable. Das Verfahren umfasst ein Erzeugen eines magnetischen Erregerfeldes mittels zumindest eines am Regal angebrachten Erregerelements. Ferner umfasst das Verfahren ein Bestimmen einer Mehrzahl an Messwerten für ein von dem Wearable aufgrund des magnetischen Erregerfeldes ausgeprägten magnetischen Antwortfeldes mittels einer Mehrzahl von am Regal angebrachten Sensoren. Zudem umfasst das Verfahren ein Bestimmen einer Position oder einer Bewegungstrajektorie des Wearable basierend auf der Mehrzahl an Messwerten mittels einer am Regal angebrachten Prozessierschaltung. Weiterhin umfasst das Verfahren ein Bestimmen mittels der Prozessierschaltung, dass der Kommissionierer das zu entnehmende Objekt aus dem Regal entnommen hat, falls die Position des Wearable sich innerhalb eines dem zu entnehmenden Objekt zugeordneten Raumbereichs befindet oder die Bewegungstrajektorie eine Bewegung des Wearable in den dem zu entnehmenden Objekt zugeordneten Raumbereich anzeigt. Das Verfahren umfasst ferner ein Senden einer Nachricht an ein System zur Überwachung des Regals, die anzeigt, dass der Kommissionierer das zu entnehmende Objekt aus dem Regal entnommen hat.

Ferner betrifft ein Ausführungsbeispiel ein Verfahren zum Bestätigen, dass von einem Kommissionierer ein abzulegendes Objekt in einem gewünschten Bereich eines Kommissionierwagens abgelegt wurde. Der Kommissionierer trägt dabei ein Wearable. Das Verfahren umfasst ein Erzeugen eines magnetischen Erregerfeldes mittels zumindest eines am Kommissionierwagen angebrachten Erregerelements. Ferner umfasst das Verfahren ein Bestimmen einer Mehrzahl an Messwerten für ein von dem Wearable aufgrund des magnetischen Erregerfeldes ausgeprägten magnetischen Antwortfeldes mittels einer Mehrzahl von am Kommissionierwagen angebrachten Sensoren. Weiterhin umfasst das Verfahren ein Bestimmen einer Position oder einer Bewegungstrajektorie des Wearable basierend auf der Mehrzahl an Messwerten mittels einer am Kommissionierwagen angebrachten Prozessierschaltung. Zudem umfasst das Verfahren ein Bestimmen mittels der Prozessierschaltung, dass der Kommissionierer das abzulegende Objekt in dem gewünschten Bereich des Kommissionierwagens abgelegt hat, falls die Position des Wearable sich innerhalb des gewünschten Bereichs des Kommissionierwagens befindet oder die Bewegungstrajektorie eine Bewegung des Wearable in den gewünschten Bereich des Kommissionierwagens anzeigt. Das Verfahren umfasst ferner ein Senden einer Nachricht an ein System zur Überwachung des Kommissionierwagens, die anzeigt, dass der Kommissionierer das abzulegende Objekt in dem gewünschten Bereich des Kommissionierwagens abgelegt hat.

### Figurenkurzbeschreibung

Einige Beispiele von Vorrichtungen und/oder Verfahren werden nachfolgend bezugnehmend auf die beiliegenden Figuren lediglich beispielhaft näher erläutert. Es zeigen:
Fig. 1 zeigt ein Ablaufdiagramm eines Ausführungsbeispiels eines Verfahrens zum Bestimmen, ob ein in einem Regal gelagerter Lagerbehälter geleert wurde;
Fig. 2 zeigt ein Ausführungsbeispiel eines Durchlaufregals;
Fig. 3 zeigt ein Ablaufdiagramm eines Ausführungsbeispiels eines Verfahrens zum Bestätigen, dass von einem Kommissionierer ein zu entnehmendes Objekt aus einem Regal entnommen wurde;
Fig. 4 zeigt ein Ausführungsbeispiel eines Regals;
Fig. 5 zeigt ein Ablaufdiagramm eines Ausführungsbeispiels eines Verfahrens zum Bestätigen, dass von einem Kommissionierer ein abzulegendes Objekt in einem gewünschten Bereich eines Kommissionierwagens abgelegt wurde;
Fig. 6 zeigt ein Ausführungsbeispiel eines Kommissionierwagens;
Fig. 7 zeigt ein Ablaufdiagramm eines Ausführungsbeispiels eines Verfahrens für einen Kommissionierwagen;
Fig. 8 zeigt ein Ausführungsbeispiel eines Kommissionierwagens zusammen mit einem Regal;
Fig. 9 zeigt ein Ablaufdiagramm eines Ausführungsbeispiels eines Verfahrens für ein Regal;
Fig. 10 zeigt ein Ausführungsbeispiel eines Regals zusammen mit einem Kommissionierwagen;
Fig. 11 zeigt ein Ablaufdiagramm eines Ausführungsbeispiels eines Verfahrens zur Kommunikation;
Fig. 12 zeigt ein Ablaufdiagramm eines Ausführungsbeispiels eines Verfahrens für einen Kommissionierwagen;
Fig. 13 zeigt ein Ablaufdiagramm eines Ausführungsbeispiels eines weiteren Verfahrens für einen Kommissionierwagen;
Fig. 14 zeigt ein Ablaufdiagramm eines Ausführungsbeispiels eines Verfahrens zum Erkennen eines Befehls oder einer Information eines Kommissionierers; und
Fig. 15 zeigt ein Ablaufdiagramm eines Ausführungsbeispiels eines Verfahrens für ein Regal.

### Beschreibung

Verschiedene Beispiele werden nun ausführlicher Bezug nehmend auf die beiliegenden Figuren beschrieben, in denen einige Beispiele dargestellt sind. In den Figuren können die Stärken von Linien, Schichten und/oder Bereichen zur Verdeutlichung übertrieben sein.

Während sich weitere Beispiele für verschiedene Modifikationen und alternative Formen eignen, sind dementsprechend einige bestimmte Beispiele derselben in den Figuren gezeigt und werden nachfolgend ausführlich beschrieben. Allerdings beschränkt diese detaillierte Beschreibung weitere Beispiele nicht auf die beschriebenen bestimmten Formen. Weitere Beispiele können alle Modifikationen, Entsprechungen und Alternativen abdecken, die in den Rahmen der Offenbarung fallen. Gleiche oder ähnliche Bezugszeichen beziehen sich in der gesamten Beschreibung der Figuren auf gleiche oder ähnliche Elemente, die bei einem Vergleich miteinander identisch oder in modifizierter Form implementiert sein können, während sie die gleiche oder eine ähnliche Funktion bereitstellen.

Es versteht sich, dass, wenn ein Element als mit einem anderen Element "verbunden" oder "gekoppelt" bezeichnet wird, die Elemente direkt, oder über ein oder mehrere Zwischenelemente, verbunden oder gekoppelt sein können. Wenn zwei Elemente A und B unter Verwendung eines "oder" kombiniert werden, ist dies so zu verstehen, dass alle möglichen Kombinationen offenbart sind, d. h. nur A, nur B sowie A und B, sofern nicht explizit oder implizit anders definiert. Eine alternative Formulierung für die gleichen Kombinationen ist "zumindest eines von A und B" oder "A und/oder B". Das Gleiche gilt, mutatis mutandis, für Kombinationen von mehr als zwei Elementen.

Die Terminologie, die hier zum Beschreiben bestimmter Beispiele verwendet wird, soll nicht begrenzend für weitere Beispiele sein. Wenn eine Singularform, z. B. "ein, eine" und "der, die, das" verwendet wird und die Verwendung nur eines einzelnen Elements weder explizit noch implizit als verpflichtend definiert ist, können weitere Beispiele auch Pluralelemente verwenden, um die gleiche Funktion zu implementieren. Wenn eine Funktion nachfolgend als unter Verwendung mehrerer Elemente implementiert beschrieben ist, können weitere Beispiele die gleiche Funktion unter Verwendung eines einzelnen Elements oder einer einzelnen Verarbeitungsentität implementieren. Es versteht sich weiterhin, dass die Begriffe "umfasst", "umfassend", "aufweist" und/oder "aufweisend" bei Gebrauch das Vorhandensein der angegebenen Merkmale, Ganzzahlen, Schritte, Operationen, Prozesse, Elemente, Komponenten und/oder einer Gruppe derselben präzisieren, aber nicht das Vorhandensein oder das Hinzufügen eines oder mehrerer anderer Merkmale, Ganzzahlen, Schritte, Operationen, Prozesse, Elemente, Komponenten und/einer Gruppe derselben ausschließen.

Sofern nicht anderweitig definiert, werden alle Begriffe (einschließlich technischer und wissenschaftlicher Begriffe) hier in ihrer üblichen Bedeutung auf dem Gebiet verwendet, zu dem Beispiele gehören.

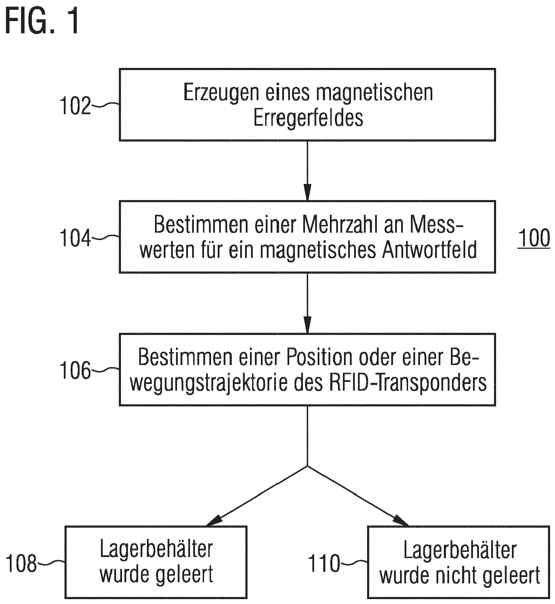

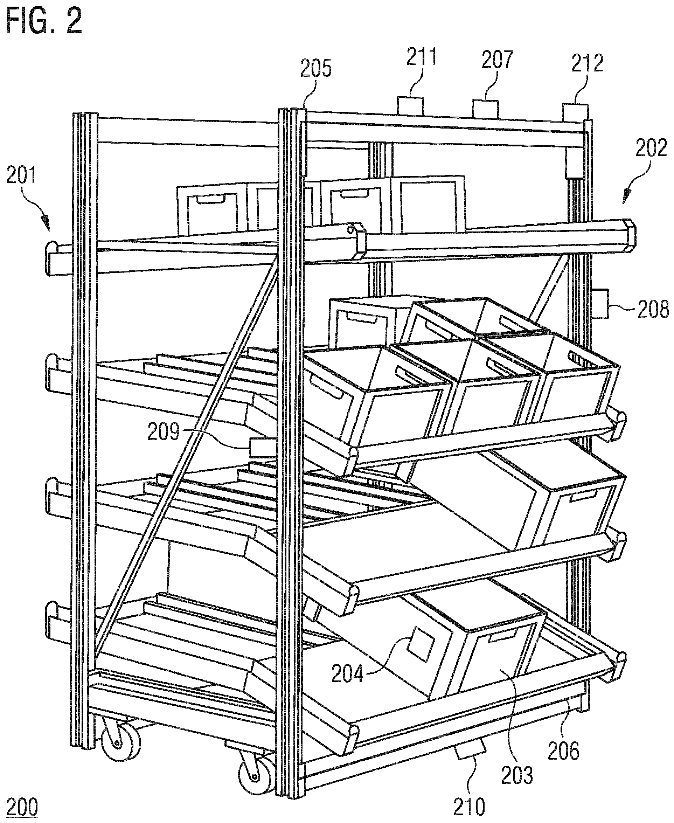

**Fig. 1** zeigt ein Ablaufdiagramm eines Verfahrens 100 zum Bestimmen, ob ein in einem Regal gelagerter Lagerbehälter geleert wurde. Das Verfahren 100 wird anhand des in **Fig. 2** dargestellten Durchlaufregals 200 näher erläutert. Dabei ist zu beachten, dass das Verfahren 100 keinesfalls auf Durchlaufregale beschränkt ist. Vielmehr kann das Verfahren für jedes beliebige Regal genutzt werden.

Das Durchlaufregal 200 wird von einer ersten Regalseite 201 mit Lagerbehältern bestückt. Die Lagerbehälter können durch Antriebselemente oder durch die Schwerkraft über Rollbahnen zu einer zweiten Regalseite 202 bewegt werden. Einzelne Artikel aus den eingelagerten Lagerbehältern können von der zweiten Regalseite 202 aus entnommen werden. Sind nunmehr alle Artikel aus einem der Lagerbehälter entnommen, so kann der Lagerbehälter auf der zweiten Regalseite 202 wieder aus dem Durchlaufregal 200 entnommen werden.

Beispielsweise für den Lagerbehälter 203 kann nun mittels des Verfahrens 100 bestimmt werden, ob dieser geleert wurde (d.h. alle Artikel aus dem Lagerbehälter 203 entnommen wurden). Dazu ist der Lagerbehälter 203 mit einem RFID-Transponder 204 versehen.

Das Verfahren 100 umfasst ein Erzeugen 102 eines magnetischen Erregerfeldes mittels zumindest eines am Regal angebrachten Erregerelements. Beispielsweise kann das Erregerelement eine an einem Regalrahmen 205 des Durchlaufregals 200 angebrachte Erregerspule 206 (mit einer oder mehreren Wicklungen) sein. Jedoch kann das Erregerelement auch anders ausgebildet sein und/oder an einer anderen Stelle an dem Durchlaufregal 200 angebracht sein.

Das magnetische Erregerfeld regt den RFID-Transponder 204 zum Ausprägen eines magnetischen Antwortfeldes an. Beispielsweise kann der RFID-Transponder 204 ein passiver RFID-Transponder, d.h. ein RFID-Transponder ohne eigene Energieversorgung, der die zur Ausprägung des magnetischen Antwortfeldes benötigte Energie einzig aus dem magnetischen Erregerfeld bezieht, sein. Der RFID-Transponder 204 kann insbesondere ein Langwellen- (engl. Low Frequency, LF) oder ein Kurzwellen (engl. High Frequency, HF)- RFID Transponder sein, der induktiv an das magnetische Erregerfeld koppelt.

Das magnetische Erregerfeld kann jedes magnetische Feld sein, welches den RFID-Transponder 204 zum Ausprägen des magnetischen Antwortfeldes anregen kann. Beispielsweise kann es sich bei dem magnetischen Erregerfeld um ein magnetisches Wechselfeld handeln. Ein magnetisches Wechselfeld kann beispielsweise mittels wechselstromdurchflossener Spulen wie der Erregerspule 206 erzeugt werden. Das magnetische Erregerfeld kann dabei eine oder mehrere Frequenzkomponenten umfassen. Auch kann eine Frequenz des magnetischen Erregerfelds variieren.

Ferner umfasst das Verfahren 100 ein Bestimmen 104 einer Mehrzahl an Messwerten für das von dem RFID-Transponder 204 aufgrund des magnetischen Erregerfeldes ausgeprägte magnetische Antwortfeld mittels einer Mehrzahl von am Regal angebrachten Sensoren (d.h. zwei oder mehr Sensoren). In Fig. 2 sind rein beispielhaft vier Sensoren 207 bis 210 gezeigt. Es versteht sich jedoch, dass auch jede andere Anzahl an Sensoren verwendet werden kann. Die Mehrzahl an Messwerten für das magnetische Antwortfeld repräsentieren Zustände des magnetischen Antwortfeldes an den jeweiligen Messpositionen der Mehrzahl an Sensoren. Beispielsweise kann die Mehrzahl an Messwerten die jeweilige Stärke des magnetischen Antwortfeldes an den Messpositionen angeben. Dabei wird das magnetische Erregerfeld an zumindest zwei (bekannten) Messpunkten durch die Mehrzahl an Sensoren gemessen. Basierend auf einer gewünschten Dimension oder einer gewünschten Genauigkeit der zu bestimmenden Position des RFID-Transponders 204 kann die Anzahl der Messpunkte gewählt werden. Beispielsweise kann das magnetische Antwortfeld an zwei, drei, vier, fünf oder mehr verschiedenen Positionen gemessen werden. Um das magnetische Antwortfeld zu messen, können z.B. oder eine oder mehrere Empfangsantennen an einer Messposition angeordnet sein. Eine in der Empfangsantenne induzierte Spannung ist dabei proportional zur lokalen Stärke des magnetischen Antwortfeldes an der Messposition.

Das Verfahren 100 umfasst weiterhin ein Bestimmen 106 einer Position oder einer Bewegungstrajektorie des RFID-Transponders 204 basierend auf der Mehrzahl an Messwerten. Für die Lokalisierung des RFID-Transponders 204 anhand der Mehrzahl an Messwerten können beispielsweise die in den deutschen Patentanmeldungen mit den Aktenzeichen 10 2018 101 753.7, 10 2018 113 120.8, 10 2013 105 936.8, 10 2016 120 250.9 sowie 10 2016 120 246.0 beschrieben Lokalisierungsverfahren genutzt werden. Der Inhalt der vorgenannten deutschen Patentanmeldungen ist hiermit in diese Anmeldung aufgenommen. Beispielsweise kann das Bestimmen der Position eines RFID-Transponders 204 daher ein Bestimmen eines jeweiligen Korrelationsgrads für jeden der Mehrzahl an Messwerten mit einem Referenzsignal umfassen. Das Referenzsignal basiert dabei auf einer dem RFID-Transponder 204 zugeordneten Datensequenz. Das Bestimmen der Position des RFID-Transponders erfolgt basierend auf den Korrelationsgraden der Mehrzahl an Messsignalen. Dieser Lokalisierungsansatz ist in der deutschen Patentanmeldung mit dem Aktenzeichen 10 2018 113 120.8 näher beschrieben. Insbesondere können die Position oder die Bewegungstrajektorie des RFID-Transponders 204 somit gemäß der IndLoc®-Technologie der Fraunhofer-Gesellschaft zur Förderung der angewandten Forschung e.V. bestimmt werden. Alternativ können auch andere Verfahren zur Lokalisierung von RFID-Transpondern anhand der Mehrzahl an Messwerten eines magnetischen Antwortfelds des RFID-Transponders 204 genutzt werden.

Falls die Position des RFID-Transponders 204 sich außerhalb eines dem Durchlaufregal 200 (bzw. allgemein eines Regal) zugeordneten Raumbereichs befindet oder die Bewegungstrajektorie eine Bewegung des RFID-Transponders 204 aus dem dem Durchlaufregal 200 zugeordneten Raumbereich anzeigt, umfasst das Verfahren 100 ein Bestimmen 108, dass der Lagerbehälter 204 geleert wurde.

Falls die Position des RFID-Transponders 204 sich innerhalb des dem Durchlaufregal 200 (bzw. allgemein eines Regal) zugeordneten Raumbereichs befindet, umfasst das Verfahren 100 ein Bestimmen 110, dass der Lagerbehälter 203 (noch) nicht geleert wurde.

Der einem Regal zugeordnete Raumbereich repräsentiert das vom Regal im Raum eingenommenen Volumen oder zumindest einen Teil davon. Beispielsweise kann der dem Durchlaufregal 200 zugeordnete Raumbereich das von dem Durchlaufregal 200 eingenommene Raumvolumen sein. Gemäß einigen Ausführungsbeispielen kann der dem Durchlaufregal 200 zugeordnete Raumbereich auch nur ein Teil des von dem Durchlaufregal 200 eingenommene Raumvolumen sein. Beispielsweise kann der dem Durchlaufregal 200 zugeordnete Raumbereich nur ein an der zweiten Regalseite 202 von Durchlaufregal 200 eingenommenes Raumvolumen sein.

Die vorbeschriebene Auswertung der Mehrzahl an Messwerten kann z.B. über eine am Regal angebrachte Prozessierschaltung 211 erfolgen. Die Prozessierschaltung 211 kann beispielsweise einen Prozessor, einen Computerprozessor (engl. CPU = Central Processing Unit), einen Grafikprozessor (engl. GPU = Graphics Processing Unit), einen Computer, ein Computersystem, einen anwendungsspezifischen integrierten Schaltkreis (engl. ASIC = Application-Specific Integrated Circuit), einen integrierten Schaltkreis (engl. IC = Integrated Circuit), ein Ein-Chip-System (engl. SoC = System on a Chip), ein programmierbares Logikelement oder ein feldprogrammierbares Gatterarray mit einem Mikroprozessor (FPGA = Field Programmable Gate Array) aufweisen, auf dem Software für die Auswertung gemäß dem obigen Grundsätzen abläuft. Ferner kann die Prozessierschaltung 211 einen oder mehrere Speicher aufweisen bzw. mit diesen gekoppelt sein.

Da der RFID-Transponder 204 an dem Lagerbehälter 203 angebracht ist, ist die Position bzw. die Bewegungstrajektorie des RFID-Transponders 204 charakteristisch für die Position bzw. die Bewegungstrajektorie des Lagerbehälters 203. Anhand der Position bzw. der Bewegungstrajektorie des RFID-Transponders 204 kann somit die Position bzw. die Bewegungstrajektorie des Lagerbehälters 203 dargestellt werden. Befindet sich die Position des RFID-Transponders 204 außerhalb des dem Durchlaufregal 200 zugeordneten Raumbereichs oder zeigt die Bewegungstrajektorie eine Bewegung des RFID-Transponders 204 aus dem dem Durchlaufregal 200 zugeordneten Raumbereich zeigt, so kann daraus geschlossen werden, dass der RFID-Transponder 204 bzw. der Lagerbehälter 203 aus dem Durchlaufregal 200 entnommen wurde. Eine Entnahme des Lagerbehälters 203 erfolgt für gewöhnlich nur, wenn alle Artikel aus dem Lagerbehälter 203 entnommen, d.h. der Lagerbehälter geleert wurde. Entsprechend kann gemäß Verfahren 100 aus der Position bzw. der Bewegungstrajektorie des RFID-Transponders 204 darauf geschlossen werden, ob der im Durchlaufregal 200 gelagerter Lagerbehälter 203 geleert wurde. Das Verfahren 100 kann somit eine automatische Erkennung, dass der Lagerbehälter 203 geleert wurde, ermöglichen. Gemäß Verfahren 100 kann somit z.B. ermittelt werden, dass ein in dem Lagerbehälter 203 gelagerter Artikel zu Neige geht.

Gemäß Ausführungsbeispielen kann diese Information ferner an ein System zur Überwachung der Befüllung des Regals übermittelt werden. Das Verfahren 100 kann dazu ferner ein Senden einer Nachricht an ein System zur Überwachung der Befüllung des Durchlaufregals 200, die anzeigt, dass der Lagerbehälter 203 geleert wurde, umfassen. Beispielsweise kann dazu ein Sender 212 an dem Durchlaufregal 200 angebracht sein. Der Sender 212 kann die Nachricht 212 z.B. mittels einer drahtlosen Übertragungstechnik (z.B. drahtloses lokales Netzwerk, etc.) oder einer drahtgebundenen Übertragungstechnik an das System zur Überwachung der Befüllung des Durchlaufregals 200 übermitteln. Alternativ kann auch Erregerelement 206 angesteuert werden, die zu übermittelnden Nachricht in das magnetische Erregerfeld zu kodieren, so dass ein entsprechender Empfänger des Systems zur Überwachung der Befüllung des Durchlaufregals 200 die Nachricht durch Dekodieren des magnetischen Erregerfelds empfangen kann. Das System zur Überwachung der Befüllung des Durchlaufregals 200 kann z.B. ein zentrales Lagersystem bzw. ein Lagerverwaltungssystem sein oder mit diesem gekoppelt sein. Mit anderen Worten: Über eine Verbindung von z.B. einem IndLoc®-System am Regal zu einem Back-End-System kann einem zentralen Lagersystem gemäß Verfahren 100 automatisch mitgeteilt werden, dass ein Artikel zu Neige geht.

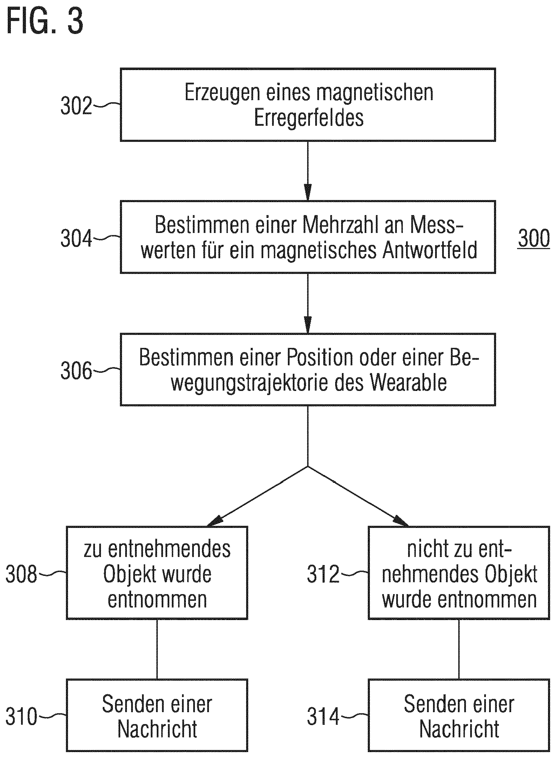

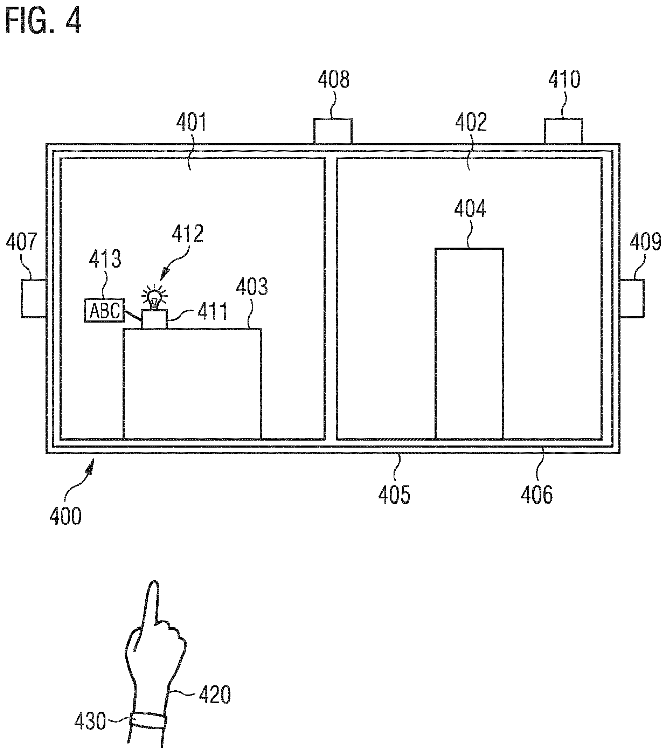

Der Grundgedanke von Verfahren 100 kann in äquivalenter Weise auch dazu genutzt werden, um zu bestätigen, dass von einem Kommissionierer ein zu entnehmendes Objekt aus einem Regal entnommen wurde. Fig. 3 zeigt hierzu ein Ablaufdiagramm eines entsprechenden Verfahrens 300 zum Bestätigen, dass von einem Kommissionierer ein zu entnehmendes Objekt aus einem Regal entnommen wurde. Das Verfahren 300 wird anhand des in Fig. 4 dargestellten Regals 400 näher erläutert. Dabei ist zu beachten, dass das Verfahren 300 keinesfalls auf das spezifische Regal 400 beschränkt ist. Vielmehr kann das Verfahren 300 für jedes beliebige Regal genutzt werden.

Das Regal 400 umfasst ein erstes Regalfach 401, in dem ein Objekt 403 gelagert ist, und ein zweites Regalfach 402, in dem ein weiteres Objekt 404 gelagert ist. Der Kommissionierer 420 (in Fig. 4 nur durch seinen Arm angedeutet) soll das Objekt 403 aus dem Regal 400 entnehmen (z.B. weil das Objekt 403 auf einem Auftrag des Kommissionierers gelistet ist), jedoch nicht das Objekt 404. Das Objekt 403 kann somit als ein zu entnehmendes Objekt verstanden werden, während das Objekt 404 als ein nicht zu entnehmendes Objekt verstanden werden kann.

Mittels des Verfahrens 300 kann nun bestimmt werden, ob das von dem Kommissionierer 420 zu entnehmende Objekt 403 aus dem Regal 400 entnommen wurde. Dazu trägt der Kommissionierer 420 ein Wearable 430. Das Wearable 430 ist eine Vorrichtung, die von dem Kommissionierer 420 getragen werden kann. Beispielsweise kann es sich bei dem Wearable um ein Accessoire (z.B. ein Armband oder ein Ring) oder um ein Kleidungsstück (z.B. ein Handschuh) handeln. Bei dem in Fig. 4 dargestellten Beispiel ist das Wearable 430 als Armband ausgebildet.

Das Verfahren 300 umfasst ein Erzeugen 302 eines magnetischen Erregerfeldes mittels zumindest eines am Regal 400 angebrachten Erregerelements. Beispielsweise kann das Erregerelement eine an einem Regalrahmen 405 des Regals 400 angebrachte Erregerspule 406 (mit einer oder mehreren Wicklungen) sein. Jedoch kann das Erregerelement auch anders ausgebildet sein und/oder an einer anderen Stelle an dem Regal 400 angebracht sein.

Das magnetische Erregerfeld regt das Wearable 430 zum Ausprägen eines magnetischen Antwortfeldes an. Dazu umfasst das Wearable 430 eine Komponente (Element, Vorrichtung), welche als Reaktion auf das magnetische Erregerfeld das magnetisches Antwortfeld ausprägen bzw. erzeugen kann. Beispielsweise kann das Wearable 430 zumindest eine aktive oder passive Spule bzw. zumindest ein aktives oder passives Spulensystem umfassen. Gemäß Ausführungsbeispielen kann das Wearable 430 z.B. drei passive oder aktive Spulen umfassen (die z.B. orthogonal zueinander angeordnet sein können). Das magnetische Erregerfeld kann dabei wie oben zu Verfahren 100 ausgeführt ausgebildet sein.

Ferner umfasst das Verfahren 300 ein Bestimmen 304 einer Mehrzahl an Messwerten für das von dem Wearable 430 ausgeprägte magnetische Antwortfeld mittels einer Mehrzahl von am Regal angebrachten Sensoren. In Fig. 4 sind beispielhaft drei Sensoren 407 bis 409 gezeigt. Es versteht sich jedoch, dass auch jede andere Anzahl an Sensoren verwendet werden kann. Hinsichtlich der Anzahl bzw. Positionierung der Sensoren gelten die oben zu Verfahren 100 gemachten Aussagen analog.

Das Verfahren 300 umfasst zudem ein Bestimmen 306 einer Position oder einer Bewegungstrajektorie des Wearable 430 basierend auf der Mehrzahl an Messwerten mittels einer am Regal angebrachten Prozessierschaltung 410. Die Lokalisierung des Wearable 430 erfolgt analog zu den oben zu Verfahren 100 gemachten Ausführungen.

Falls die Position des Wearable 430 sich innerhalb eines dem zu entnehmenden Objekt 403 zugeordneten Raumbereichs befindet oder die Bewegungstrajektorie eine Bewegung des Wearable 430 in den dem zu entnehmenden Objekt 403 zugeordneten Raumbereich anzeigt, umfasst das Verfahren 300 ein Bestimmen 308 mittels der Prozessierschaltung, dass der Kommissionierer 420 das zu entnehmende Objekt 403 aus dem Regal 400 entnommen hat. Ferner umfasst das Verfahren 300 ein Senden 310 einer Nachricht an ein System zur Überwachung des Regals 400, die anzeigt, dass der Kommissionierer 420 das zu entnehmende Objekt 403 aus dem Regal 400 entnommen hat.

Falls die Position des Wearable 430 sich innerhalb eines dem weiteren in dem Regal 400 gelagerten Objekt 404 zugeordneten Raumbereichs befindet oder die Bewegungstrajektorie eine Bewegung des Wearable 430 in den dem weiteren Objekt 404 zugeordneten Raumbereich anzeigt, umfasst das Verfahren 300 ein Bestimmen 312 mittels der Prozessierschaltung 410, dass der Kommissionierer 420 das nicht zu entnehmende Objekt 404 aus dem Regal 400 entnommen hat.

Entsprechend umfasst das Verfahren 300 dann ein Senden 314 einer Nachricht an das System zur Überwachung des Regals 400, die anzeigt, dass der Kommissionierer 420 das nicht zu entnehmende Objekt 404 aus dem Regal 400 entnommen hat.

Der dem zu entnehmenden Objekt 403 zugeordneten Raumbereich repräsentiert den Raum bzw. das Volumen, in dem das zu entnehmende Objekt 403 gelagert ist bzw. von dem angenommen wird, dass das zu entnehmende Objekt 403 darin gelagert ist. Beispielsweise kann der dem zu entnehmenden Objekt 403 zugeordneten Raumbereich der von dem ersten Regalfach 401 eingenommene Raum oder ein Teil davon sein. Entsprechend repräsentiert der dem weiteren in dem Regal 400 gelagerten Objekt 404 zugeordneten Raumbereich den Raum bzw. das Volumen, in dem das nicht zu entnehmende Objekt 404 gelagert ist bzw. von dem angenommen wird, dass das nicht zu entnehmende Objekt 404 darin gelagert ist. Beispielsweise kann der dem nicht zu entnehmenden Objekt 404 zugeordneten Raumbereich der von dem zweiten Regalfach 402 eingenommene Raum oder ein Teil davon sein.

Da das Wearable 430 von dem Kommissionierer 420 getragen wird, ist die Position bzw. die Bewegungstrajektorie des Wearable 430 charakteristisch für die Eingriffsposition des Kommissionierers 420 in das Regal 400. Befindet sich die Position des Wearable 430 innerhalb des dem zu entnehmenden Objekt 403 zugeordneten Raumbereichs oder zeigt die Bewegungstrajektorie eine Bewegung des Wearable 430 in den dem zu entnehmenden Objekt 403 zugeordneten Raumbereich an, kann daraus geschlossen werden, dass der Kommissionierer das zu entnehmenden Objekt 403 entnommen hat. Analog kann aus der Position bzw. der Bewegungstrajektorie des Wearable 403 geschlossen werden, dass der Kommissionierer das nicht zu entnehmenden Objekt 404, d.h. das falsche Objekt, aus dem Regal 400 entnommen hat. Das Verfahren 300 kann somit eine automatisierte Erkennung, ob ein zu entnehmenden Objekt 403 tatsächlich oder stattdessen ein nicht zu entnehmenden Objekt 404 aus dem Regal 400 entnommen wurde, ermöglichen.

Diese Information wird ferner an das System zur Überwachung des Regals 400 übermittelt, so dass abhängig vom entnommenen Objekt weiterführende Verfahrensschritte ausgeführt werden können.

Um dem Kommissionierer 420 bei der Entnahme des zu entnehmenden Objekts 403 zu unterstützen, kann der Kommissionierer 420 ähnlich zu einem PbL-System optisch geführt werden. Dazu kann das zu entnehmende Objekt 403 wie in Fig. 4 mit einem RFID-Transponder 411 versehen sein, der seinerseits mit einem Leuchtmittel 412 (z.B. eine LichtEmittierende Diode, LED) gekoppelt ist. Beispielsweise kann es sich um einen induktiv koppelnden, passiven RFID-Transponder handeln. Alternativ kann auch ein dem zu entnehmenden Objekt 403 zugeordnete Teilbereich des Regals 400 (z.B. das erste Regalfach 401) mit dem RFID-Transponder 411 versehen sein. Falls das zu entnehmenden Objekt - anders als in Fig. 4 dargestellt - in einem im Regal befindlichen Lagerbehälter gelagert ist, kann der Lagerbehälter mit dem zu entnehmenden Objekt mit dem RFID-Transponder 411 versehen sein.

Das Verfahren 300 umfasst in einigen Ausführungsbeispielen ein Empfangen von Informationen über das zu entnehmende Objekt 403 durch die Prozessierschaltung 410 (z.B. Typ des zu entnehmenden Objekts). Ferner umfasst das Verfahren 300 ein Ansteuern des Erregerelements 406 mittels der Prozessierschaltung 410, um das magnetische Erregerfeld mit einem Befehl für den RFID-Transponder 411 zu kodieren, so dass der RFID-Transponder 411 das Leuchtmittel 412 bei Empfang des Befehls aktiviert und mittels aus dem magnetischen Erregerfeld gewonnener elektrischer Energie versorgt. Mit anderen Worten: Der RFID-Transponder 411 ist eingerichtet, bei Empfang des in das magnetische Erregerfeld für den RFID-Transponder 411 kodierten Befehls, das Leuchtmittel 412 zu aktivieren und mit aus dem magnetischen Erregerfeld gewonnener elektrischer Energie zu versorgen. Entsprechend kann das Leuchtmittel 412 zum Leuchten gebracht werden, so dass der Kommissionierer 420 visuell wahrnehmen kann, wo sich das zu entnehmende Objekt 403 im Regal 400 befindet.

Falls bzw. nachdem bestimmt wurde, dass der Kommissionierer 420 das zu entnehmende Objekt 403 aus dem Regal 400 entnommen hat, umfasst das Verfahren 300 ferner ein Ansteuern des Erregerelements 406 mittels der Prozessierschaltung 410, um das magnetische Erregerfeld mit einem weiteren Befehl für den RFID-Transponder 411 zu kodieren, so dass der RFID-Transponder 411 das Leuchtmittel 412 bei Empfang des weiteren Befehls deaktiviert. Mit anderen Worten: Der RFID-Transponder 411 ist eingerichtet, bei Empfang eines weiteren in das magnetische Erregerfeld kodierten Befehls, das Leuchtmittel 412 zu deaktivieren. Dem Kommissionierer 420 kann somit visuell angezeigt werden, dass er das zu entnehmende Objekt 403 korrekt entnommen hat.

Alternativ oder ergänzend kann der RFID-Transponder 411 auch mit einem Anzeigeelement 413 (z.B. eine Flüssigkristallanzeige oder E-Ink-Anzeige) gekoppelt sein. Entsprechend kann das Verfahren 300 ein Ansteuern des Erregerelements 406 mittels der Prozessierschaltung 410 umfassen, um das magnetische Erregerfeld mit einem Befehl für den RFID-Transponder 411 zu kodieren, so dass der RFID-Transponder 411 das Anzeigeelement 413 bei Empfang des Befehls mittels aus dem magnetischen Erregerfeld gewonnener elektrischer Energie versorgt und das Anzeigemittel 413 die empfangenen Informationen über das zu entnehmende Objekt 403 anzeigt. Mit anderen Worten: Der RFID-Transponder 411 ist eingerichtet, bei Empfang des in das magnetische Erregerfeld für den RFID-Transponder 411 kodierten Befehls, das Anzeigeelement 413 mit aus dem magnetischen Erregerfeld gewonnener elektrischer Energie zu versorgen und das Anzeigeelement 413 anzusteuern, in dem Befehl enthaltene Informationen anzuzeigen. Über das Anzeigeelement 413 kann z.B. angezeigt werden, wie viele Gegenstände vom Typ des zu entnehmenden Objekts aus dem Regal zu entnehmen sind oder welcher Kommissionierer das Objekt zu entnehmen hat. Der Kommissionierer 420 kann somit mit weitergehenden Informationen versorgt werden.

Da gemäß dem Verfahren 300 die Artikel bzw. Objekte im Regal 400 zu den RFID-Transpondern zugeordnet sind und nicht zu den Fächern des Regals, können die Artikel bzw. Objekte im Wesentlichen beliebig in das Regal 400 einsortiert werden. Vertauscht einsortierte Artikel bzw. Objekte führen im Gegensatz zu einer gewöhnlichen Fachzuordnung zu keinen Fehlentnahmen, da über die RFID-Transponder die Artikelpositionen angezeigt werden. Gemäß dem Verfahren 300 kann eine manuelle und somit zeitaufwendige Quittierung der Entnahme eines Objekts aus dem Regal 400 vermieden werden. Die Quittierung bzw. Bestätigung der Entnahme erfolgt gemäß dem Verfahren 300 automatisch. Ebenso werden Fehlgriffe des Kommissionierers automatisch erkannt. Ein flexibles PbL System kann den Kommissionierer zusätzlich unterstützen.

Die Informationen über das zu entnehmende Objekt 403 können beispielsweise von einem Kommissionierwagen des Kommissionierers 420 bereitgestellt werden. Beispielsweise kann der Kommissionierwagen selbst in der Lage sein, ein magnetisches Feld auszuprägen und mit den Informationen über das zu entnehmende Objekt 403 zu kodieren. Entsprechend kann das Verfahren 300 ein Messen des magnetischen Feldes des Kommissionierwagens mittels der Mehrzahl von am Regal angebrachten Sensoren 407, 408 und 409 umfassen. Beispielsweise können sowohl das Regal 400 als auch der Kommissionierwagen mit einem IndLoc®-System ausgestattet sein.

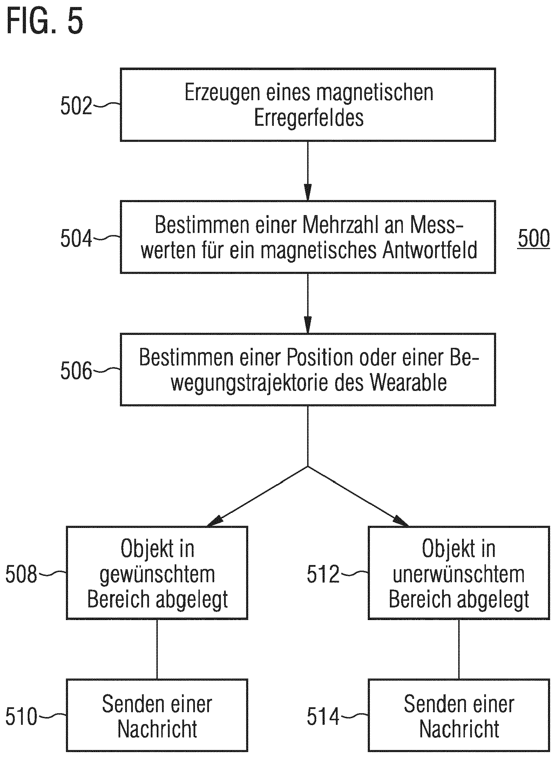

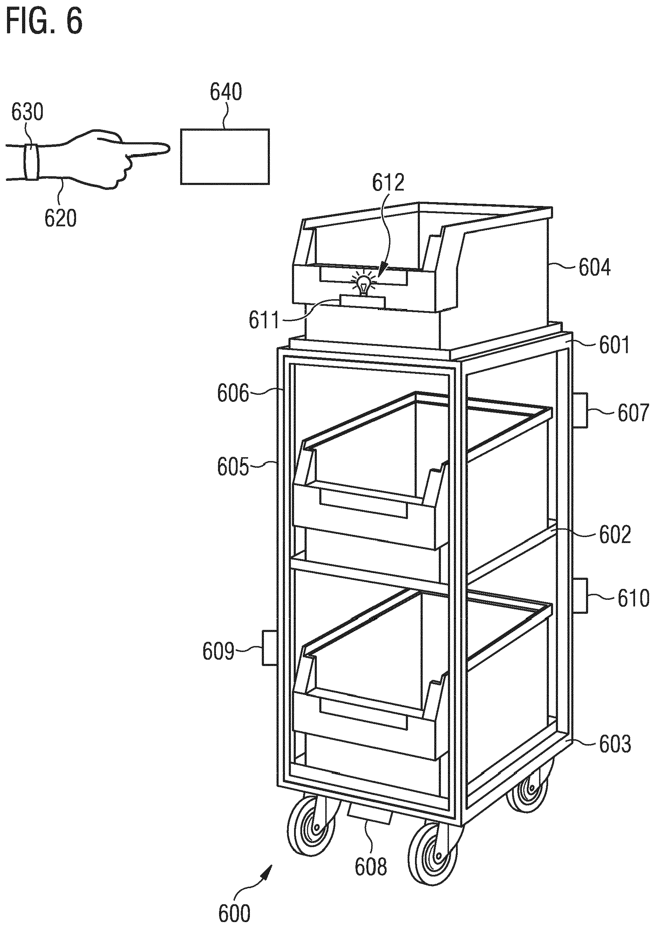

Der Grundgedanke des Verfahrens 300 kann in äquivalenter Weise auch dazu genutzt werden, um zu bestätigen, dass von einem Kommissionierer ein abzulegendes Objekt in einem gewünschten Bereich eines Kommissionierwagens abgelegt wurde. **Fig. 5** zeigt hierzu ein Ablaufdiagramm eines entsprechenden Verfahrens 500 zum Bestätigen, dass von einem Kommissionierer ein abzulegendes Objekt in einem gewünschten Bereich eines Kommissionierwagens abgelegt wurde. Das Verfahren 500 wird anhand des in **Fig. 6** dargestellten Kommissionierwagens 600 näher erläutert. Dabei ist zu beachten, dass das Verfahren 500 keinesfalls auf den spezifischen Kommissionierwagen 600 beschränkt ist. Vielmehr kann das Verfahren 500 für jeden beliebigen Kommissionierwagen genutzt werden.

Der Kommissionierwagen 600 umfasst drei Ablagebereiche 601, 602 und 603. In jeden der Ablagebereiche 601, 602 und 603 kann ein Objekt abgelegt werden. Im Ablagebereich 601 befindet sich ein Lagerbehälter 604 für ein durch den Kommissionierer 620 abzulegende Objekt 640. Beispiels kann der Lagerbehälter 604 einem Auftrag zugeordnet sein, für den das Objekt 640 zu kommissionieren ist. Der gewünschte Bereich des Kommissionierwagens 600 (d.h. der Bereich in dem das Objekt 640 abzulegen ist) ist somit der im Ablagebereich 601 befindliche Lagerbehälter 604 bzw. ein dem Lagerbehälter 604 zugeordnetes Volumen bzw. Raumbereich. Mittels des Verfahrens 500 kann nunmehr bestätigt werden, dass vom Kommissionierer 620 das abzulegende Objekt 640 in dem Lagerbehälter 604 abgelegt wurde. Dazu trägt der Kommissionierer 620 wiederum ein Wearable 630 wie vorangehend beschrieben.

Das Verfahren 500 umfasst ein Erzeugen 502 eines magnetischen Erregerfeldes mittels zumindest eines am Kommissionierwagen 600 angebrachten Erregerelements. Beispielsweise kann das Erregerelement eine an einem Rahmen 605 des Kommissionierwagens 600 angebrachte Erregerspule 606 (mit einer oder mehreren Wicklungen) sein. Jedoch kann das Erregerelement auch anders ausgebildet sein und/oder an einer anderen Stelle an dem Kommissionierwagen 600 angebracht sein. Das magnetische Erregerfeld kann dabei wie oben zu Verfahren 100 ausgeführt ausgebildet sein.

Das magnetische Erregerfeld regt das Wearable 630 zum Ausprägen eines magnetischen Antwortfeldes an.

Ferner umfasst das Verfahren 500 ein Bestimmen 504 einer Mehrzahl an Messwerten für das von dem Wearable 630 ausgeprägte magnetische Antwortfeld mittels einer Mehrzahl von am Kommissionierwagen 600 angebrachten Sensoren. In Fig. 4 sind beispielhaft drei Sensoren 607 bis 609 gezeigt. Es versteht sich jedoch, dass auch jede andere Anzahl an Sensoren verwendet werden kann. Hinsichtlich der Anzahl bzw. Positionierung der Sensoren gelten die oben zu Verfahren 100 gemachten Aussagen analog.

Das Verfahren 500 umfasst zudem ein Bestimmen einer Position oder einer Bewegungstrajektorie des Wearable 630 basierend auf der Mehrzahl an Messwerten mittels einer am Kommissionierwagen 600 angebrachten Prozessierschaltung 610. Die Lokalisierung des Wearable 630 erfolgt wieder analog zu den oben zu Verfahren 100 gemachten Ausführungen.

Falls die Position des Wearable 630 sich innerhalb des gewünschten Bereichs des Kommissionierwagens 600 (z.B. innerhalb des Lagerbehälters 604) befindet oder die Bewegungstrajektorie eine Bewegung des Wearable 630 in den gewünschten Bereich des Kommissionierwagens 600 anzeigt, umfasst das Verfahren 500 ein Bestimmen 508 mittels der Prozessierschaltung 610, dass der Kommissionierer 620 das abzulegende Objekt 640 in dem gewünschten Bereich des Kommissionierwagens 600 abgelegt hat.

Ferner umfasst das Verfahren 500 ein Senden 510 einer Nachricht an ein System zur Überwachung des Kommissionierwagens 600, die anzeigt, dass der Kommissionierer 620 das abzulegende Objekt 640 in dem gewünschten Bereich des Kommissionierwagens 600 abgelegt hat.

Falls die Position des Wearable 630 sich in einem von dem gewünschten Bereich verschiedenen Bereich des Kommissionierwagens 600 (z.B. im Ablagebereich 603) befindet oder die Bewegungstrajektorie eine Bewegung des Wearable 630 in den von dem gewünschten Bereich verschiedenen Bereich des Kommissionierwagens 600 anzeigt, umfasst das Verfahren 500 ein Bestimmen 512 mittels der Prozessierschaltung, dass der Kommissionierer 620 das abzulegende Objekt 640 in einem unerwünschten Bereich des Kommissionierwagens 600 abgelegt hat.

Entsprechend umfasst das Verfahren 500 dann ein Senden 614 einer Nachricht an das System zur Überwachung des Kommissionierwagens 600, die anzeigt, dass der Kommissionierer 620 das abzulegende Objekt 640 in dem unerwünschten Bereich des Kommissionierwagens 600 abgelegt hat.

Der gewünschte Bereich des Kommissionierwagens 600 repräsentiert den Raum bzw. das Volumen in dem das Objekt 640 abzulegen ist. Im Beispiel von Fig. 6 repräsentiert de gewünschte Bereich des Kommissionierwagens 600 den Lagerbehälter 604.

Da das Wearable 630 von dem Kommissionierer 620 getragen wird, ist die Position bzw. die Bewegungstrajektorie des Wearable 630 charakteristisch für die Eingriffsposition des Kommissionierers 420 in den Kommissionierwagen 600 und somit die Ablageposition des Objekts 640.

Befindet sich die Position des Wearable 630 innerhalb des gewünschten Bereichs des Kommissionierwagens 600 oder zeigt die Bewegungstrajektorie eine Bewegung des Wearable 630 in den gewünschten Bereich des Kommissionierwagens 600 an, so kann daraus geschlossen werden, dass der Kommissionierer das abzulegende Objekt 640 innerhalb des gewünschten Bereichs abgelegt hat. Analog kann aus der Position bzw. der Bewegungstrajektorie des Wearable 630 geschlossen werden, dass der Kommissionierer 620 das abzulegende Objekt 640 außerhalb des gewünschten Bereichs, d.h. an einem falschen Ort, abgelegt hat. Das Verfahren 500 kann somit eine automatisierte Erkennung, ob ein abzulegendes Objekt 630 richtig oder falsch im Kommissionierwagen 600 abgelegt wurde, ermöglichen.

Diese Information wird ferner an das System zur Überwachung des Kommissionierwagens 600 übermittelt, so dass abhängig vom bestimmten Ablagebereich weiterführende Verfahrensschritte ausgeführt werden können.

Um dem Kommissionierer 620 bei der Ablage des Objekts 640 zu unterstützen, kann der Kommissionierer 620 ähnlich zu einem PbL-System optisch geführt werden. Dazu kann der in dem gewünschten Bereich des Kommissionierwagens 600 befindliche Lagerbehälter 604 für das abzulegende Objekt 640 wie in Fig. 6 gezeigt mit einem RFID-Transponder 611 versehen sein, der seinerseits mit einem Leuchtmittel 612 wie etwa einer LED gekoppelt ist. Beispielsweise kann es sich um einen induktiv koppelnden, passiven RFID-Transponder handeln. Falls ein abzulegendes Objekt - anders als in Fig. 6 dargestellt - direkt im Kommissionierwagen 600 abzulegen ist, d.h. ohne Lagerbehälter dort abgelegt wird, kann der gewünschte Bereich des Kommissionierwagens 600 (z.B. der Ablagebereich 601 selbst) mit dem RFID-Transponder 611 versehen sein.

Das Verfahren 300 umfasst in einigen Ausführungsbeispielen ein Empfangen von Information über das abzulegende Objekt 640 durch die Prozessierschaltung 610 (z.B. Typ des abzulegenden Objekts). Ferner umfasst das Verfahren 300 ein Ansteuern des Erregerelements 606 mittels der Prozessierschaltung 610, um das magnetische Erregerfeld mit einem Befehl für den RFID-Transponder 611 zu kodieren, so dass der RFID-Transponder 611 das Leuchtmittel 612 bei Empfang des Befehls aktiviert und mittels aus dem magnetischen Erregerfeld gewonnener elektrischer Energie versorgt. Entsprechend kann das Leuchtmittel 612 zum Leuchten gebracht werden, so dass der Kommissionierer 620 visuell wahrnehmen kann, wo er das Objekt 640 im Kommissionierwagen 600 abzulegen hat.

Falls bzw. nachdem bestimmt wurde, dass der Kommissionierer 620 das abzulegende Objekt 640 in dem gewünschten Bereich des Kommissionierwagens 600 abgelegt hat, umfasst das Verfahren 500 ferner ein Ansteuern des Erregerelements 606 mittels der Prozessierschaltung 610, um das magnetische Erregerfeld mit einem weiteren Befehl für den RFID-Transponder 611 zu kodieren, so dass der RFID-Transponder 611 das Leuchtmittel 612 bei Empfang des weiteren Befehls deaktiviert. Dem Kommissionierer 620 kann somit visuell angezeigt werden, dass er das Objekt 640 korrekt abgelegt hat.

Gemäß dem Verfahren 500 kann eine manuelle und somit zeitaufwendige Quittierung der Ablage eines Objekts in dem Kommissionierwagen 600 vermieden werden. Die Quittierung bzw. Bestätigung der Ablage erfolgt gemäß dem Verfahren 500 automatisch. Ebenso werden Fehlgriffe des Kommissionierers automatisch erkannt. Ein flexible PbL System kann den Kommissionierer zusätzlich unterstützen.

Die Informationen über das abzulegende Objekt 640 können beispielsweise von einem Regal, aus dem der Kommissionierer 620 das abzulegende Objekt 640 entnommen hat (z.B. Regal 400), bereitgestellt werden. Beispielsweise kann das Regal selbst in der Lage sein, ein magnetisches Feld auszuprägen und mit den Informationen über das abzulegende Objekt 640 zu kodieren. Entsprechend kann das Verfahren 500 ein Messen des magnetischen Feldes des Regals mittels der Mehrzahl von am Kommissionierwagen 600 angebrachten Sensoren 607, 608 und 609 umfassen. Beispielsweise können sowohl das Regal als auch der Kommissionierwagen 600 dazu mit einem IndLoc®-System ausgestattet sein.

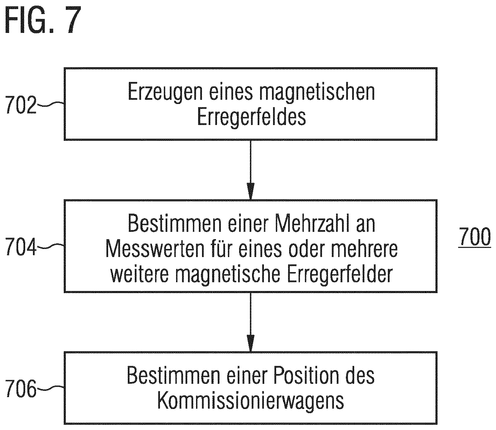

Die am Kommissionierwagen sowie am Regal vorhandenen Elemente zur induktiven Nahfeldortung können ferner auch zur Positionsbestimmung für den Kommissionierwagen bzw. zur Navigation des Kommissionierwagens genutzt werden. Dies wird nachfolgend unter Bezugnahme auf die Figs. 7 bis 10 näher erläutert.

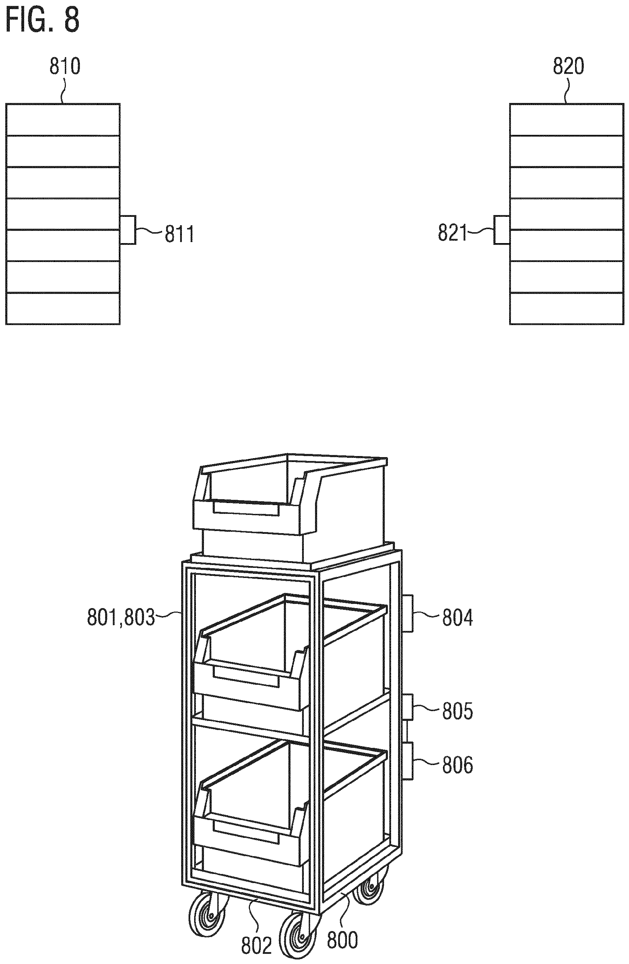

Fig. 7 zeigt ein Ablaufdiagramm eines Verfahrens 700 für einen Kommissionierwagen (oder allgemein einen beweglichen Gegenstand) zur Positionsbestimmung. Das Verfahren 700 wird anhand des in **Fig. 8** dargestellten Kommissionierwagens 800 näher erläutert. Dabei ist zu beachten, dass das Verfahren 700 keinesfalls auf den spezifischen Kommissionierwagen 800 beschränkt ist. Vielmehr kann das Verfahren 700 für jeden beliebigen Kommissionierwagen (oder allgemein jeden beweglichen Gegenstand) genutzt werden.

Das Verfahren 700 umfasst ein Erzeugen 702 eines magnetischen Erregerfeldes mittels zumindest eines am Kommissionierwagen 800 (am beweglichen Gegenstand) angebrachten Erregerelements 801. Beispielsweise kann das Erregerelement eine an einem Rahmen 802 des Kommissionierwagens 800 angebrachte Erregerspule 803 (mit einer oder mehreren Wicklungen) sein. Jedoch kann das Erregerelement auch anders ausgebildet sein und/oder an einer anderen Stelle an dem Kommissionierwagen 800 angebracht sein. Das magnetische Erregerfeld kann dabei wie oben zu Verfahren 100 ausgeführt ausgebildet sein.

Ferner umfasst das Verfahren 700 ein Bestimmen 704 von Messwerten für eines oder mehrere weitere magnetische Erregerfelder mittels zumindest eines am Kommissionierwagen 800 (am beweglichen Gegenstand) angebrachten Sensors 804. In Fig. 8 ist beispielhaft ein einziger Sensor 804 gezeigt. Es versteht sich jedoch, dass auch jede andere Anzahl an Sensoren verwendet werden kann. Hinsichtlich der Anzahl bzw. Positionierung der Sensoren gelten die oben zu Verfahren 100 gemachten Aussagen analog.

Das eine oder die mehreren weiteren magnetischen Erregerfelder werden von jeweiligen an einem oder mehreren, feststehenden Regalen angebrachten Erregerelementen erzeugt. Bei der in Fig. 8 dargestellten Situationen befindet sich der Kommissionierwagen 800 in der Nähe von zwei feststehenden Regalen 810 und 820, so dass ein am ersten Regal 810 angebrachtes Erregerelement 811 ein erstes weiteres magnetisches Erregerfeld erzeugt und ein am zweiten Regal 820 angebrachtes Erregerelement 821 ein zweites weiteres magnetisches Erregerfeld erzeugt. Dabei ist zu beachten, dass das Verfahren 700 keinesfalls auf in Fig. 8 gezeigte Anzahl von feststehenden Regalen beschränkt ist. Vielmehr kann das Verfahren 700 für jede beliebige Anzahl von feststehenden Regalen bzw. weiteren magnetischen Erregerfeldern genutzt werden (z.B. ein, drei, fünf oder mehr weitere magnetische Erregerfelder). Die an den Regalen 810 und 820 angebrachten Erregerelement 811 und 821 können ihr jeweiliges weiteres magnetisches Erregerfeld beispielsweise ansprechend auf das von der Erregerspule 803 erzeugte magnetische Erregerfeld ausprägen. Alternativ oder ergänzend kann das das von der Erregerspule 803 erzeugte magnetische Erregerfeld auch an den Regalen 810 und 820 gemessen werden, um die Position des Kommissionierwagens 800 zu bestimmen (siehe hierzu die nachfolgenden Ausführungen zu Verfahren 900). Die weiteren magnetischen Erregerfelder der feststehenden Regale 810 und 820 werden dabei von den Regalen 810 und 820 so ausgeprägt, dass diese von einem Empfänger unterschieden werden können. Um die weiteren magnetischen Erregerfelder der feststehenden Regale 810 und 820 unterscheiden zu können, kann das durch das jeweilige Regal ausgeprägte weitere magnetische Erregerfeld z.B. mit für das Regal spezifischen Daten moduliert sein. Alternativ oder ergänzend können den einzelnen Regalen 810 und 820 feste Zeitfenster für das Ausprägen ihres jeweiligen weiteren magnetischen Erregerfelds zugeordnet sein. Ferner können die weiteren magnetischen Erregerfelder der feststehenden Regalen 810 und 820 alternativ oder ergänzend durch die Regale bei unterschiedlichen Frequenzen ausgeprägt werden, um diese so unterscheidbar zu machen. Gemäß einem weiteren Ausführungsbeispiel kann jedes der Regale sein jeweiliges weiteres magnetisches Erregerfeld mit einer Feldkomponente bei einer ersten Frequenz, die von allen oder mehreren Regalen genutzt wird, und mit einer zusätzlichen Feldkomponente bei einer zweiten Frequenz, die nur (exklusiv) von dem jeweiligen Regal genutzt wird, ausprägen, um die weiteren magnetischen Erregerfelder der Regale unterscheidbar zu machen.

Das Verfahren 700 umfasst weiterhin ein Bestimmen 706 einer momentanen Position des Kommissionierwagens 800 mittels einer am Kommissionierwagen 800 (am beweglichen Gegenstand) angebrachten Prozessierschaltung 805 basierend auf den Messwerten für die weiteren magnetischen Erregerfelder der Regale 810 und 820. Die Messwerte für die weiteren magnetischen Erregerfelder der Regale 810 und 820 zeigen Feldstärken der weiteren magnetischen Erregerfelder an. Basierend auf den Feldstärken der weiteren magnetischen Erregerfelder der Regale 810 und 820 wird die relative Position des Kommissionierwagens 800 zu den feststehenden Regalen 810 und 820 gemäß an sich bekannten Techniken bestimmt.

Entsprechend kann gemäß Verfahren 800 eine relative Position des Kommissionierwagens 800 (des beweglichen Gegenstands) in Bezug auf die Regale 810 und 820 bestimmt werden.

Ferner kann mittels weiterer Informationen auch eine Absolutposition des Kommissionierwagens 800 (des beweglichen Gegenstands) in einem vorgegebenen Koordinatensystem gemäß dem Verfahren 800 ermittelt werden. Beispielsweise können die weiteren magnetischen Erregerfelder der Regale 810 und 820 mit Informationen über die jeweiligen (Absolut-) Positionen der feststehenden Regale 810 und 820 kodiert sein. Alternativ können die jeweiligen (Absolut-) Positionen der feststehenden Regale 810 und 820 auch in einem von der Prozessierschaltung 805 auslesbaren Speicher 806 gespeichert sein. Entsprechend kann das Bestimmen 706 der momentanen Position des Kommissionierwagens 800 (des beweglichen Gegenstands) ferner auf den Informationen über die jeweiligen Positionen der feststehenden Regale 810 und 820 basieren, um die Absolutposition des Kommissionierwagens 800 zu bestimmen. Die ermittle Absolut- oder Relativposition des Kommissionierwagens 800 (des beweglichen Gegenstands) kann gemäß Ausführungsbeispielen auch zur Navigation genutzt werden, um einen Kommissionierer bei seiner Arbeit zu unterstützten.

Das Verfahren 700 kann in einigen Ausführungsbeispielen dazu ein Empfangen durch die Prozessierschaltung 805 von Informationen, die eines oder mehrere der feststehenden Regale 810 und 820 anzeigen, aus dem bzw. denen ein Kommissionierer ein Objekt in den Kommissionierwagen 800 zu laden hat. Diese Information kann z.B. von einem Back-End-System zur Lagersteuerung erhalten werden.

Das Verfahren 700 umfasst dann weiterhin ein Bestimmen einer Route zu dem oder den feststehenden Regale, aus dem bzw. denen ein Kommissionierer ein Objekt in den Kommissionierwagen 800 zu laden hat, basierend auf der momentanen Position des Kommissionierwagens 800.

Angenommen die durch die Prozessierschaltung 805 empfangene Informationen besagt, dass der Kommissionierer ein Objekt aus dem Regal 810 in den Kommissionierwagen 800 laden soll, so wird gemäß Verfahren 700 basierend auf der momentanen Position des Kommissionierwagens 800 eine Route zu dem Regal 810 bestimmt. Die Routeninformationen können über ein entsprechendes Ausgabegerät (z.B. ein mobiles Gerät das vom Kommissionierer getragen wird oder ein am Kommissionierwagen 800 angebrachtes Gerät) an den Kommissionierer ausgegeben werden, um den Kommissionierer bei seiner Wegfindung zu unterstützten.

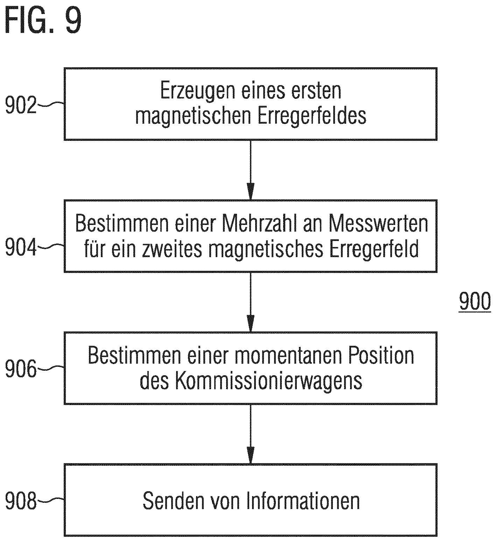

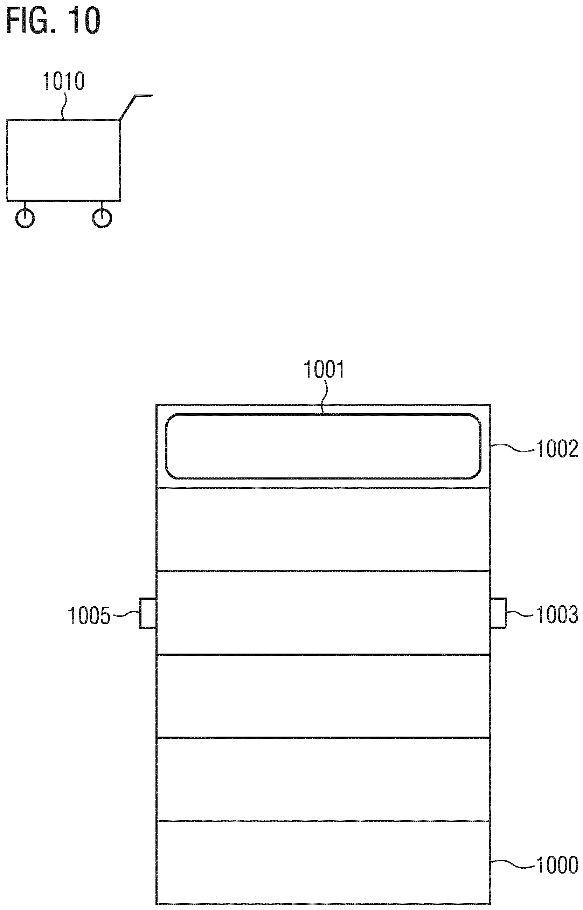

Ein alternativer oder ergänzender Ansatz zur Positionsbestimmung ist nachfolgend unter Bezugnahme auf die Figs. 9 und 10 beschrieben. **Fig. 9** zeigt ein Ablaufdiagramm eines Verfahrens 900 für ein (feststehendes) Regal zur Positionsbestimmung. Das Verfahren 900 wird anhand des in **Fig. 10** dargestellten Regals 1000 näher erläutert. Dabei ist zu beachten, dass das Verfahren 900 keinesfalls auf das spezifische Regal 1000 beschränkt ist. Vielmehr kann das Verfahren 900 für jedes beliebige Regal genutzt werden.

Das Verfahren 900 umfasst ein Erzeugen 902 eines ersten magnetischen Erregerfeldes mittels zumindest eines am Regal 1000 angebrachten Erregerelements 1001. Beispielsweise kann das Erregerelement 1001 eine an einem Rahmen 1002 des Regals 1000 angebrachte Erregerspule (mit einer oder mehreren Wicklungen) sein. Jedoch kann das Erregerelement auch anders ausgebildet sein und/oder an einer anderen Stelle an dem Regal 1000 angebracht sein. Das magnetische Erregerfeld kann dabei wie oben zu Verfahren 100 ausgeführt ausgebildet sein.

Ferner umfasst das Verfahren 900 ein Bestimmen 904 von Messwerten für ein von einem Kommissionierwagen 1010 als Reaktion auf den Empfang des ersten magnetischen Erregerfeldes erzeugten zweiten magnetischen Erregerfelds mittels zumindest eines am Regal 1000 angebrachten Sensors 1003. In Fig. 10 ist beispielhaft ein einziger Sensor 1003 gezeigt. Es versteht sich jedoch, dass auch jede andere Anzahl an Sensoren verwendet werden kann. Hinsichtlich der Anzahl bzw. Positionierung der Sensoren gelten die oben zu Verfahren 100 gemachten Aussagen analog.

Das Verfahren 900 umfasst weiterhin ein Bestimmen 906 einer momentanen Position des Kommissionierwagens 1010 mittels einer am Regal angebrachte Prozessierschaltung 1004 basierend auf den Messwerten für das zweite magnetische Erregerfeld des Kommissionierwagens 1010.

Zudem umfasst das Verfahren 900 ein Senden 908 von Informationen über die Position des Kommissionierwagens 1010 an den Kommissionierwagen 1010.

Analog zu den obigen Ausführungen zu Verfahren 700 kann aus den Messwerten für das zweite magnetische Erregerfeld des Kommissionierwagens 1010 eine relative Position des Kommissionierwagens 1010 in Bezug auf das Regal 1000 bestimmt.

Die Informationen über die Position des Kommissionierwagens 1010 können somit die relative Position des Kommissionierwagens 1010 in Bezug auf das Regal 1000 angeben. Alternativ kann die Prozessierschaltung 1004 die Information über die Relativposition des Kommissionierwagens 1010 auch mit Informationen über eine Absolutposition des Regals 1000 in einem vorgegebenen Koordinatensystem kombinieren, um eine Absolutposition des Kommissionierwagens 1010 zu bestimmen und diese an den Kommissionierwagen 1010 zu senden.

Das Senden der Positionsinformationen an den Kommissionierwagen 1010 kann auf vielfältige Weise erfolgen. Beispielsweise kann das Verfahren 900 dazu ein Ansteuern des Erregerelements 1001 durch die Prozessierschaltung 1004 umfassen, um das erste magnetische Erregerfeld mit den Informationen über die Position des Kommissionierwagens 1010 zu kodieren. Alternativ kann das Verfahren 900 dazu ein Senden einer Nachricht mit den Informationen über die Position des Kommissionierwagens 1010 an ein Computer-System (Back-End System), das mit dem Kommissionierwagen 1010 kommunizieren kann, umfassen, so dass die Informationen über die Position des Kommissionierwagens 1010 mittels des Computer-Systems an den Kommissionierwagen 1010 weitergeleitet werden.

Die gemäß dem Verfahren 900 ermittelten Positionsinformationen können von dem Kommissionierwagen 1010 analog zu den zu Verfahren 700 gemachten Ausführungen für die Navigation genutzt werden. Ebenso kann eine gemäß dem Verfahren 900 ermittelte (und an den Kommissionierwagen 1010 übertragene) Relativposition des Kommissionierwagens 1010 von dem Kommissionierwagen 1010 analog zu den zu Verfahren 700 gemachten Ausführungen mit weiteren Informationen kombiniert werden, um die Absolutposition des Kommissionierwagens 1010 zu bestimmen.

Gemäß Ausführungsbeispielen kann ein Kommissionierwagen auch seine Position gemäß Verfahren 700 bestimmen und zusätzlich Positionsinformationen von einem Regal gemäß Verfahren 900 erhalten. Der Kommissionierwagen kann die beiden Positionsinformationen anschließend kombinieren, um seine Position zu bestimmen.

Beispielsweise können sowohl Regale als auch Kommissionierwagen mit jeweils mit einem IndLoc®-System ausgestattet sein, um das Verfahren 700 und/oder das Verfahren 900 durchzuführen.

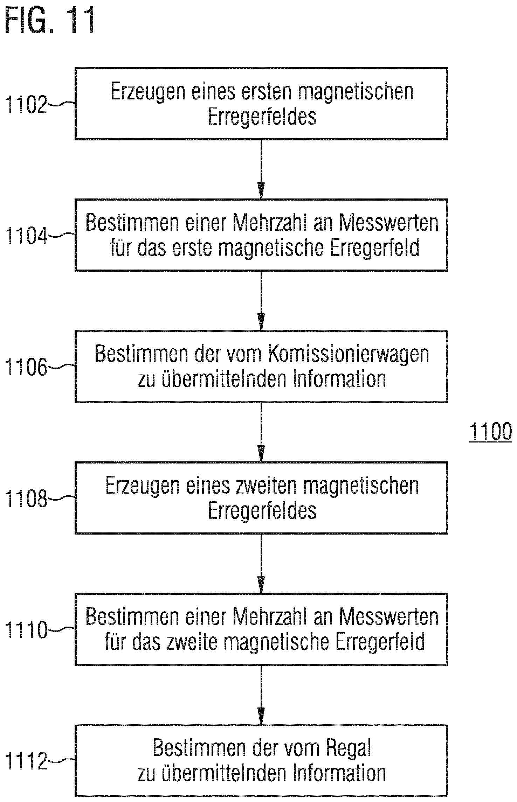

Wie vorangehend bereits mehrfach angedeutet, können die von einem Regal oder einem Kommissionierwagen ausgeprägten magnetischen Felder nicht nur zur Lokalisierung genutzt werden, sondern auch zur Kommunikation bzw. zum Austausch von Informationen. Um diesen Aspekt nochmals zusammenzufassen ist nachfolgend unter Bezugnahme auf **Fig. 11** ein Ablaufdiagramm eines Verfahrens 1100 zur Kommunikation dargestellt.

Das Verfahren 1100 umfasst ein Erzeugen 1102 eines ersten magnetischen Erregerfeldes mittels zumindest eines am Kommissionierwagen angebrachten Erregerelements. Das erste magnetische Erregerfeld ist dabei mit vom Kommissionierwagen zu übermittelnden Informationen kodiert. Das erste magnetische Erregerfeld kann dabei wie oben z.B. zu Verfahren 100 ausgeführt ausgebildet sein.

Ferner umfasst das Verfahren 1100 ein Bestimmen 1104 einer Mehrzahl an ersten Messwerten für das erste magnetische Erregerfeld mittels einer Mehrzahl von an einem Regal angebrachten Sensoren.

Das Verfahren 1100 umfasst zudem ein Bestimmen 1106 der vom Kommissionierwagen zu übermittelnden Informationen aus der Mehrzahl an ersten Messwerten mittels einer am Regal angebrachten Prozessierschaltung.

Über eine entsprechende Ausprägung bzw. Modulation des ersten magnetischen Erregerfelds kann der Kommissionierwagen somit Information an das Regal übertragen. Für die Kommunikation von Informationen in die umgekehrte Richtung umfasst das Verfahren 1100 ferner die folgenden Schritte.

Das Verfahren 1100 umfasst ein Erzeugen 1108 eines zweiten magnetischen Erregerfeldes mittels zumindest eines am Regal angebrachten Erregerelements. Das zweite magnetische Erregerfeld ist dabei mit vom Regal zu übermittelnden Informationen kodiert.

Ferner umfasst das Verfahren 1100 ein Bestimmen 1110 einer Mehrzahl an zweiten Messwerten für das zweite magnetische Erregerfeld mittels einer Mehrzahl von am Kommissionierwagen angebrachten Sensoren. Das zweite magnetische Erregerfeld kann dabei ebenfalls wie oben z.B. zu Verfahren 100 ausgeführt ausgebildet sein.

Weiterhin umfasst das Verfahren 1100 ein Bestimmen 1112 der vom Regal zu übermittelnden Informationen aus der Mehrzahl an zweiten Messwerten mittels einer am Kommissionierwagen angebrachte Prozessierschaltung.

Wie bereits oben in den vorangehenden Ausführungsbeispielen angedeutet, kann die Art bzw. der Inhalt der zwischen Regal und Kommissionierwagen ausgetauschten Informationen vielfältig sein. Nachfolgend werden zwei Beispiele für ausgetauschte Informationen näher beschrieben, wobei das Verfahren 1100 jedoch nicht auf den Austauschen dieser spezifischen Arten von Information beschränkt ist. Vielmehr kann mittels des Verfahrens 1100 jede beliebige Information zwischen Regal und Kommissionierwagen ausgetauscht werden.

Beispielsweise kann gemäß dem Verfahren 1100 die am Kommissionierwagen angebrachte Prozessierschaltung das am Kommissionierwagen angebrachte Erregerelement ansteuern, das erste magnetische Erregerfeld zu erzeugen, wenn die Prozessierschaltung feststellt, dass sich der Kommissionierwagen innerhalb eines vorbestimmten Bereichs um das Regal befindet. Die vom Kommissionierwagen zu übermittelnden Informationen kann dann z.B. Informationen über eines oder mehrere von einem Kommissionierer aus dem Regal zu entnehmende Objekte umfassen. Nähert sich der Kommissionierwagen dem Regal, kann der Kommissionierwagen dem Regal somit mitteilen, welches bzw. welche Objekte der Kommissionierer daraus zu entnehmen hat. Entsprechend kann das Regal z.B. gemäß dem Verfahren 300 eines oder mehrere Leuchtmittel ansteuern, um dem Kommissionierer visuell anzuzeigen, wo sich das oder die zu entnehmenden Objekte in dem Regal befinden. Der Kommissionierer kann die Objekte dadurch schneller im Regal auffinden, so dass die Kommissionierung schneller ablaufen kann.

In einem anderen Beispiel kann die am Regal angebrachte Prozessierschaltung gemäß dem Verfahren 1100 z.B. das am Regal angebrachte Erregerelement ansteuern, das zweite magnetische Erregerfeld zu erzeugen, wenn die Prozessierschaltung feststellt, dass von einem Kommissionierer ein im Kommissionierwagen abzulegendes Objekt aus dem Regal entnommen wurde. Die vom Regal zu übermittelnden Informationen kann dann z.B. Informationen über das im Kommissionierwagen abzulegende Objekt umfassen. Das Regal kann dem Kommissionierwagen somit mitteilen, welches bzw. welche Objekte der Kommissionierer demnächst im Kommissionierwagen ablegen wird. Entsprechend kann der Kommissionierwagen z.B. gemäß dem Verfahren 500 eines oder mehrere Leuchtmittel ansteuern, um dem Kommissionierer visuell anzuzeigen, wo er das oder die zu entnehmenden Objekte im Kommissionierwagen ablegen soll. Der Kommissionierer kann die Objekte dadurch schneller im Kommissionierwagen ablegen, so dass die Kommissionierung schneller ablaufen kann.

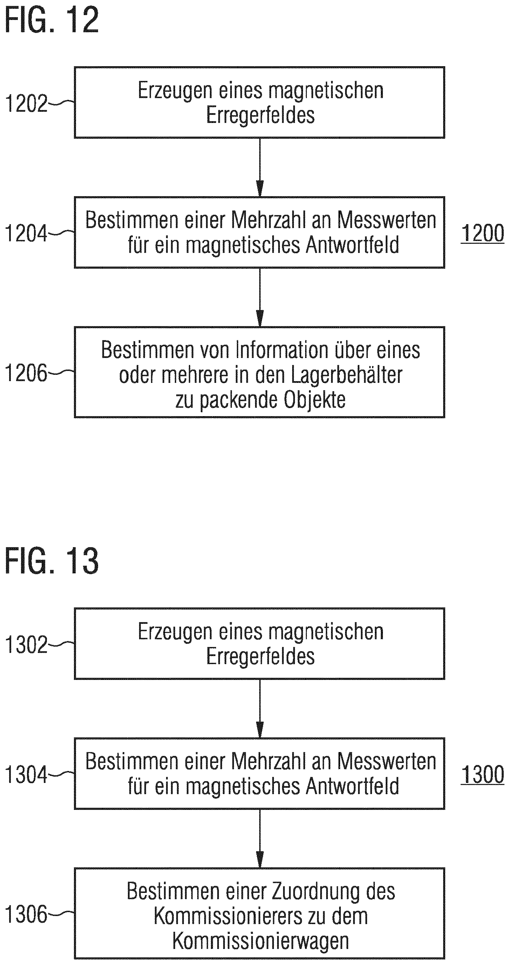

Ebenso kann der Kommissionierwagen über magnetische Felder mit einem auf dem Kommissionierwagen befindlichen RFID-Transponder Informationen austauschen. Dazu ist nachfolgend unter Bezugnahme auf **Fig. 12** ein Ablaufdiagramm eines Verfahrens 1200 für einen Kommissionierwagen dargestellt. Ein RFID-Transponder ist mit einem Lagerbehälter, der auf dem Kommissionierwagen angeordnet ist, gekoppelt.

Das Verfahren 1220 umfasst ein Erzeugen 1202 eines magnetischen Feldes mittels zumindest eines am Kommissionierwagen angebrachten Erregerelements. Das magnetische Erregerfeld kann dabei wie oben z.B. zu Verfahren 100 ausgeführt ausgebildet sein.

Ferner umfasst das Verfahren 1200 ein Bestimmen 1204 einer Mehrzahl an Messwerten für ein von dem RFID-Transponder aufgrund des magnetischen Erregerfeldes ausgeprägten magnetischen Antwortfeldes mittels einer Mehrzahl von am Kommissionierwagen angebrachten Sensoren. Das magnetische Antwortfeld des RFID-Transponders ist dabei mit Informationen über eines oder mehrere in den Lagerbehälter zu packende Objekte kodiert.

Das Verfahren 1200 umfasst weiterhin ein Bestimmen 1206 der Informationen über das eine oder die mehreren in den Lagerbehälter zu packende Objekte aus der Mehrzahl an Messwerten mittels einer am Kommissionierwagen angebrachte Prozessierschaltung.

Beispielsweise kann der in Fig. 6 dargestellte RFID-Transponder 611 Informationen über das oder die in den Lagerbehälter 604 abzulegenden Objekte speichern, welche mittels des magnetischen Erregerfeldes der am Kommissionierwagen 600 angebrachten Erregerspule 606 und der Prozessierschaltung 610 gemäß dem Verfahren 1200 abgefragt werden können.

Die Informationen über das eine oder die mehreren in den Lagerbehälter zu packende Objekte können gemäß Ausführungsbeispielen des Verfahrens 1200 genutzt werden, um den Kommissionierer bei der Kommissionierung zu unterstützten. Dazu ist nachfolgend ein Beispiel beschrieben.

Gemäß Ausführungsbeispielen kann das Verfahren 1200 z.B. ein Abrufen durch die Prozessierschaltung des Kommissionierwagens von Informationen über eines oder mehrere Regale, in dem bzw. in denen das eine oder die mehreren in den Lagerbehälter zu packenden Objekte gelagert sind, umfassen. Beispielsweise können die Informationen über die Lagerorte des oder der in den Lagerbehälter zu packenden Objekte von einem Computer-System bzw. Back-End System zur Lagerverwaltung abgerufen werden.

In Ausführungsbeispielen kann das Verfahren 1200 ferner ein Ansteuern des Erregerelements des Kommissionierwagens durch die Prozessierschaltung umfassen, um das magnetische Erregerfeld mit Informationen über eines oder mehrere der in den Lagerbehälter zu packenden Objekte, die in einem Regal gelagert sind, zu kodieren, wenn die Prozessierschaltung feststellt, dass sich der Kommissionierwagen innerhalb eines vorbestimmten Bereichs um dieses Regal befindet. Nähert sich der Kommissionierwagen dem Regal, kann der Kommissionierwagen dem Regal somit mitteilen, welches bzw. welche Objekte der Kommissionierer daraus zu entnehmen hat. Entsprechend kann das Regal z.B. gemäß dem Verfahren 300 eines oder mehrere Leuchtmittel ansteuern, um dem Kommissionierer visuell anzuzeigen, wo sich das oder die zu entnehmenden Objekte in dem Regal befinden. Der Kommissionierer kann die Objekte dadurch schneller im Regal auffinden, so dass die Kommissionierung schneller ablaufen kann.

Ferner kann der Kommissioniere gemäß Ausführungsbeispielen des Verfahren 1200 bei der Navigation zu dem Regal unterstützt werden. Beispielsweise kann das Verfahren 1200 ein Bestimmen einer Route zu einem Regal, in dem eines oder mehrere der in den Lagerbehälter zu packenden Objekte gelagert sind, mittels der Prozessierschaltung umfassen. Die Route zu dem Regal wird dabei basierend auf einer momentanen Position des Kommissionierwagens und den Informationen über das eine oder die mehreren Regale, in dem bzw. in denen das eine oder die mehreren in den Lagerbehälter zu packenden Objekte gelagert sind, bestimmt. Ferner umfasst das Verfahren 1200 dann ein Ansteuern eines am Kommissionierwagen angebrachten Anzeigeelements (z.B. eine Flüssigkristallanzeige oder E-Ink-Anzeige) mittels der Prozessierschaltung, um Informationen über die Route zu dem Regal anzuzeigen. Entsprechend kann der Kommissionierer zielgerichtet zu dem Regal navigiert werden, aus dem eines oder mehrere Objekte in den Lagerbehälter zu kommissionieren sind. Die Kommissionierung kann daher schneller ablaufen.

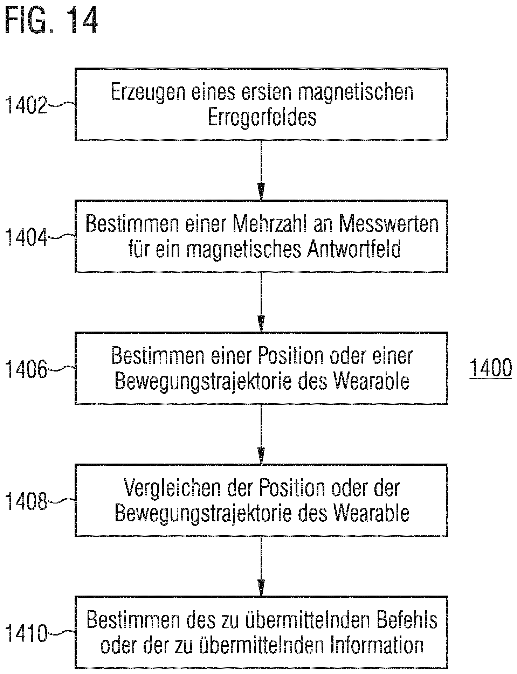

Die magnetischen Felder können ebenfalls zur Kommunikation bzw. Informationsübertragung zwischen Kommissionierer und Regal bzw. Kommissionierwagen genutzt werden. Dies ist nachfolgend unter Bezugnahme auf die Figs. 13 und 14 näher beschrieben.

**Fig. 13** zeigt ein Ablaufdiagramm eines Verfahrens 1300 für einen Kommissionierwagen. Ein Kommissionierer trägt ferner ein Wearable gemäß der obigen Beschreibung.

Das Verfahren 1300 umfasst ein Erzeugen 1302 eines magnetischen Erregerfeldes mittels zumindest eines am Kommissionierwagen angebrachten Erregerelements. Das magnetische Erregerfeld kann dabei wie oben zu Verfahren 100 ausgeführt ausgebildet sein.

Das magnetische Erregerfeld regt das Wearable zum Ausprägen eines magnetischen Antwortfeldes an.

Weiterhin umfasst das Verfahren 1300 ein Bestimmen 1304 einer Mehrzahl an Messwerten für das magnetische Antwortfeld mittels einer Mehrzahl von am Kommissionierwagen angebrachten Sensoren.

Ferner umfasst das Verfahren 1300 ein Bestimmen 1306 einer Zuordnung des Kommissionierers zu dem Kommissionierwagen mittels einer am Kommissionierwagen angebrachten Prozessierschaltung. Das Bestimmen 1306 der Zuordnung erfolgt basierend auf der Mehrzahl an Messwerten für das magnetische Antwortfeld.

Beispielsweise kann das Verfahren 1300 dazu ein Bestimmen einer Position oder einer Bewegungstrajektorie des Wearable basierend auf der Mehrzahl an Messwerten umfassen. Ferner ein Vergleichen der Position oder der Bewegungstrajektorie des Wearable mit zumindest einer Referenzposition oder einer Referenzbewegungstrajektorie. Falls die Position oder die Bewegungstrajektorie des Wearable mit der Referenzposition oder der Referenzbewegungstrajektorie übereinstimmt, umfasst das Verfahren 1300 dann das Bestimmen der Zuordnung des Kommissionierers zu dem Kommissionierwagen.

Der Kommissionierer kann somit mit dem Kommissionierwagen gekoppelt bzw. "verheiratet" werden. Beispielsweise kann das Wearable ein am Handgelenk des Kommissionierers getragenes Armband sein, das mittels eines am Kommissionierwagen angebrachten IndLoc®-Systems geortet wird. Die Zuordnung des Kommissionierers zu dem Kommissionierwagen kann z.B. über ein spezifisches Bewegungsmuster des Wearable (d.h. eine Referenzbewegungstrajektorie) oder eine spezifische Positionierung des Wearable in Bezug auf den Kommissionierwagen (d.h. eine Referenzposition) erfolgen.

Basierend auf dem zugeordneten Kommissionierer kann der Kommissionierwagen anschließend den Kommissionierer betreffende Informationen abrufen und ausgeben. Beispielsweise kann das Verfahren 1300 daher ferner ein Abrufen von Informationen über eines oder mehrere von dem dem Kommissionierwagen zugeordneten Kommissionierer in den Kommissionierwagen zu ladende Objekte durch die Prozessierschaltung umfassen. Der Kommissionierwagen erhält somit anhand der Identität Informationen darüber, mit welchen Objekten er zu bestücken ist. Diese Information kann von dem Kommissionierwagen weiterverarbeitet werden.

Gemäß Ausführungsbeispielen kann das Verfahren 1300 z.B. ferner ein Ansteuern eines am Kommissionierwagen angebrachten Anzeigeelements (z.B. eine Flüssigkristallanzeige oder E-Ink-Anzeige) mittels der Prozessierschaltung umfassen, um Informationen betreffend das eine oder die mehreren von dem Kommissionierer in den Kommissionierwagen zu ladenden Objekte anzuzeigen (z.B. die Art des Objekts, das das Objekt lagernde Regal, eine Route zu dem Objekt, etc.).

Beispielsweise können gemäß dem Verfahren 1300 auch weitere Informationen zu den in den Kommissionierwagen zu ladenden Objekten abgerufen (z.B. Abrufen von Informationen über eines oder mehrere Regale, in dem bzw. in denen die in den Kommissionierwagen zu ladenden Objekte gelagert sind) und weiterverarbeitet werden (z.B. Bestimmung einer Route zu einem Regal).

**Fig. 14** zeigt weiterhin ein Ablaufdiagramm eines Verfahrens 1400 zum Erkennen eines Befehls oder einer Information eines Kommissionierers. Das Verfahren 1400 kann sowohl für ein Regal als auch für einen Kommissionierwagen genutzt werden. Der Kommissionierer trägt wiederum ein Wearable gemäß der obigen Beschreibung.

Das Verfahren 1400 umfasst ein Erzeugen 1402 eines magnetischen Erregerfeldes mittels zumindest eines am Kommissionierwagen oder am Regal angebrachten Erregerelements. Das magnetische Erregerfeld kann dabei wie oben zu Verfahren 100 ausgeführt ausgebildet sein.

Das magnetische Erregerfeld regt das Wearable wiederum zum Ausprägen eines magnetischen Antwortfeldes an.

Zudem umfasst das Verfahren 1400 ein Bestimmen 1404 einer Mehrzahl an Messwerten für das von dem Wearable ausgeprägte magnetischen Antwortfeldes mittels einer Mehrzahl von am Kommissionierwagen oder am Regal angebrachten Sensoren.

Ferner umfasst das Verfahren 1400 ein Bestimmen 1406 einer Position oder einer Bewegungstrajektorie des Wearable basierend auf der Mehrzahl an Messwerten. Das Verfahren 1400 umfasst ein Vergleichen 1408 der Position oder der Bewegungstrajektorie des Wearable mit einer oder mehreren Referenzpositionen oder Referenzbewegungstrajektorien. Den Referenzpositionen oder Referenzbewegungstrajektorien ist dabei jeweils ein zu übermittelnder Befehl des Kommissionierers oder eine zu übermittelnde Information des Kommissionierers zugeordnet.

Weiterhin umfasst das Verfahren 1400 ein Bestimmen 1410 desjenigen zu übermittelnden Befehls oder derjenigen zu übermittelnden Information des Kommissionierers als Befehl oder Information des Kommissionierers, dessen bzw. deren zugeordnete Referenzposition oder Referenzbewegungstrajektorie mit der Position oder der Bewegungstrajektorie des Wearable übereinstimmt.

Der Kommissionierer kann gemäß dem Verfahren 1400 somit mittels einer Gestensteuerung Informationen bzw. Befehle an das Regal oder den Kommissionierwagen übermitteln. Beispielsweise kann eine spezifische Bewegungstrajektorie für die Information, dass ein aus dem Regal zu entnehmendes Objekt beschädigt oder nicht vorhanden ist, vorgesehen sein. Ebenso kann z.B. eine spezifische Bewegungstrajektorie für die Information, dass ein Objekt beim Einladen in den Kommissionierwagen beschädigt wurde, vorgesehen sein. Entsprechend kann für eine Vielzahl an Befehlen oder Informationen eine Referenzposition oder eine Referenzbewegungstrajektorie definiert werden, um die Kommissionierer eine einfache Kommunikation mit der Lagerverwaltung zu ermöglichen.

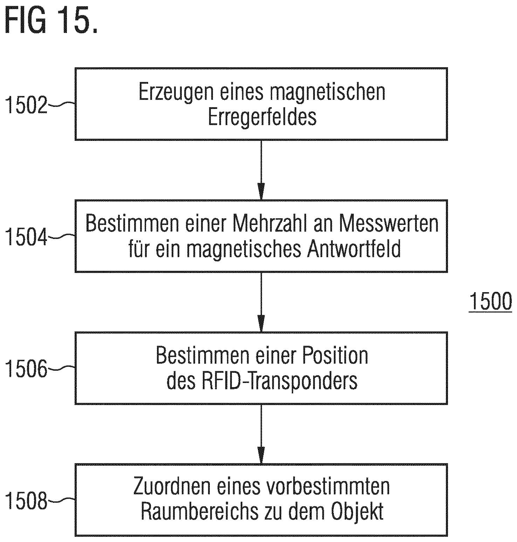

Ähnlich zu dem in Zusammenhang mit Fig. 12 beschriebenen Verfahren 1200 für Kommissionierwagen, kann auch ein Regal über magnetische Felder mit einem in dem Regal befindlichen RFID-Transponder Informationen austauschen. Dazu ist nachfolgend unter Bezugnahme auf **Fig. 15** ein Ablaufdiagramm eines Verfahrens 1500 für ein Regal dargestellt. Ein in dem Regal gelagertes Objekt oder ein in dem Regal gelagerter Lagerbehälter des Objekts ist mit einem RFID-Transponder versehen.

Das Verfahren 1500 umfasst ein Erzeugen 1502 eines magnetischen Erregerfeldes mittels zumindest eines am Regal angebrachten Erregerelements. Das magnetische Erregerfeld kann dabei wie oben z.B. zu Verfahren 100 ausgeführt ausgebildet sein.

Das magnetische Erregerfeld regt den RFID-Transponder zum Ausprägen eines magnetischen Antwortfeldes an.

Ferner umfasst das Verfahren 1500 ein Bestimmen 1504 einer Mehrzahl an Messwerten für das von dem RFID-Transponder ausgeprägte magnetische Antwortfeld mittels einer Mehrzahl von am Regal angebrachten Sensoren. Das magnetische Antwortfeld ist dabei mit Informationen über das Objekt kodiert.

Das Verfahren 1500 umfasst weiterhin ein Bestimmen 1506 einer Position des RFID-Transponders mittels einer am Regal angebrachten Prozessierschaltung basierend auf der Mehrzahl an Messwerten für das magnetische Antwortfeld. Die Positionsbestimmung kann gemäß den obigen Ausführungen erfolgen.

Zudem umfasst das Verfahren 1500 ein Zuordnen 1508 eines vorbestimmten Raumbereichs des Regals zu dem Objekt mittels der Prozessierschaltung. Das Zuordnen des Raumbereichs basiert auf der Position des RFID-Transponders.

Beispielsweise kann der in Fig. 4 dargestellte RFID-Transponder 411 mittels der am Regal 400 angebrachten Erregerspule 406 sowie der Prozessierschaltung 410 lokalisiert werden. Entsprechend kann z.B. das Volumen bzw. der Raumbereich des ersten Regalfachs 401 dem RFID-Transponder 411 und somit dem Objekt 403 zugeordnet werden.

Die Informationen über den dem Objekt zugeordneten Raumbereich können gemäß Ausführungsbeispielen des Verfahrens 1500 genutzt werden, um den Kommissionierer bei der Kommissionierung zu unterstützten. Dazu ist nachfolgend ein Beispiel beschrieben.

Das magnetische Antwortfeld des RFID-Transponders kann gemäß Ausführungsbeispielen mit Informationen über das Objekt kodiert sein. Daher kann das Verfahren 1500 ferner ein Bestimmen von Informationen über das Objekt mittels der Prozessierschaltung basierend auf der Mehrzahl an Messwerten sowie ein Zuordnen der Informationen über das Objekt zu dem dem Objekt zugeordneten Raumbereich umfassen.

Werden weiterhin durch die Prozessierschaltung Informationen, dass das Objekt durch einen Kommissionierer aus dem Regal zu entnehmen ist, empfangen, so kann das Verfahren 1500 ein Ansteuern des Erregerelements mittels der Prozessierschaltung umfassen, um das magnetische Erregerfeld mit einem Befehl für den RFID-Transponder zu kodieren. Der RFID-Transponder ist mit einem Leuchtmittel gekoppelt, so dass der RFID-Transponder das Leuchtmittel bei Empfang des Befehls aktiviert und mittels aus dem magnetischen Erregerfeld gewonnener elektrischer Energie versorgt. Der Kommissionierer kann das Objekt dadurch schneller im Regal auffinden, so dass die Kommissionierung schneller ablaufen kann.

Beispielsweise kann die in Fig. 4 dargestellte Prozessierschaltung 410 über den RFID-Transponder 411 das Leuchtmittel 412 zum Leuchten bringen, so dass der Kommissionierer das Objekt 403 im Regal 400 schneller auffinden kann.

Die oben beschriebenen Verfahren können einzeln oder in Kombination zur Vereinfachung und Flexibilisierung einer Vielzahl von Tätigkeiten im Logistikbereich genutzt werden. Nachfolgend werden einige beispielhafte Anwendungsszenarien, bei denen eines oder mehrere der vorbeschriebenen Verfahren zum Einsatz kommen, beschrieben. Bei den Anwendungsszenarien wird davon ausgegangen, dass das IndLoc®-System zur Durchführung der einzelnen Verfahren genutzt wird, d.h. das IndLoc®-Lokalisierungssystem sowohl auf den statischen Lagerregalen als auch auf dem mobilen Kommissionierwagen installiert ist.

Die Regale und Kommissionierwagen können gemäß den oben beschriebenen Verfahren (z.B. Verfahren 1100) miteinander über das magnetische Feld kommunizieren. So wird das Magnetfeld z.B. einer Erregerschleife, durch welche ein modulierter Wechselstrom fließt, von den Magnetfeldempfangssensoren am anderen Element gemessen. Die aufmodulierten Daten können decodiert und interpretiert werden. Somit können Informationen von einem Regal bzw. Kommissionierwagen zum nächsten übermittelt werden.

Durch die auf Magnetfeldern basierende Kommunikation der Regale und Kommissionierwagen untereinander, kann sich der Kommissionierwagen (welcher als ein mobiles Regal verstanden werden kann) innerhalb der statischen Regale einer Halle selbst lokalisieren (z.B. gemäß Verfahren 700 oder gemäß Verfahren 900).

Im Kommissionierwagen (mobilen Kommissionierregal) als auch im statischen Kommissionierregal befinden sich Kisten oder andere Lagebehälter, welche mit den oben beschriebenen LF oder HF-RFID Transpondern ausgestattet sind. Die Transponder verfügen über eine Energy Harvesting Schaltung welche ihre Energie aus dem Erregerfeld des jeweiligen Regals oder Kommissionierwagens entnimmt. Somit können diese ohne Batterie funktionieren. Den Transpondern ist gemäß Ausführungsbeispielen jeweils mindestens ein Leuchtmittel in Form z.B. einer LED zugeordnet. Diese kann separat über einen Befehl an den Transponder angesteuert werden. Auch ein Display, welches über Energy Harvesting mit Strom versorgt wird, kann am Transponder angeschlossen sein. Nun kann wie z.B. in den deutschen Patentanmeldungen mit den Aktenzeichen 10 2018 101 753.7 und 10 2018 113 120.8 näher beschrieben der Transponder (bzw. die Kiste) im Regal oder im Kommissionierwagen geortet werden und mittels Kommunikation zwischen mit den Elementen des IndLoc Systems am Regal bzw. Kommissionierwagen bei Bedarf angesteuert werden, um die LED aufleuchten zu lassen (z.B. gemäß den Verfahren 1200 und 1500).

Wie bereits bei der Beschreibung des Verfahrens 100 angedeutet, kann dieses genutzt werden, um Leerbestände zu erkennen. In ein Durchlaufregal werden volle Kisten mit Artikeln einsortiert. Die Kisten sind mit einem LF- oder HF-RFID-Transponder ausgestattet. Die Transponder werden vom IndLoc®-System geortet. Sobald eine Kiste entfernt wird, erkennt das IndLoc®-System dies und schlussfolgert die Entnahme einer leeren Kiste hieraus. Durch eine Verbindung zwischen dem IndLoc®-System und einem Back-End-System wird dem zentralem Lagersystem gemäß dem Verfahren 100 automatisch mitgeteilt, dass ein Artikel zu Neige geht.

Ein weiteres Anwendungsszenario ist Kommissionierung oder Multikommissionierung. Der mobile Kommissionierwagen ist mit Kisten inklusive passiver LF- oder HF-RFID-Transponder ausgestattet. Die Transponder und Kisten sind den einzelnen Aufträgen zugeordnet. Die Transponder verfügen über LEDs. Das IndLoc®-System am mobilen Regal erkennt gemäß dem Verfahren 1200 automatisch über die Kommunikation mit den Kisten welche Aufträge sich auf diesem Wagen befinden. Mittels Kommunikation mit z.B. dem Back-End-System, weiß das mobile Regal automatisch welche Artikel kommissioniert werden müssen. Es ist kein separater Scan-Schritt erforderlich

Alternativ kann sich der Kommissionierer mit dem Kommissionierwagen gemäß dem Verfahren 1300 verheiraten und sich somit dem Kommissionierwagen zuordnen. Dies kann ebenfalls über das IndLoc®-System erfolgen indem das Wearable (umfassend z.B. eine passive Lokalisierungsspule) am Handgelenk des Kommissionierers am Kommissionierwagen vom IndLoc®-System geortet wird. Die Verheiratung kann z.B. mittels eines Bewegungsmusters seitens des Kommissionierers erfolgen.

Da die Regale in der Lagerhalle mit dem IndLoc®-System ausgestattet sind, können die festinstallierten Regale das Magnetfeld des Kommissionierwagens detektieren und so über ein Ausprägen des eigenen Magnetfeldes mit dem mobilen Regal zu Ortungszwecken über das Magnetfeld kommunizieren (z.B. gemäß Verfahren 900). Über das gemessene Feld eines bestimmten festen Regals, kann sich der Kommissionierwagen auch selbst in der Halle orten (z.B. gemäß Verfahren 700) und kann so dem Kommissionierer Navigationsinformationen anzeigen, um zum nächstgelegenen Entnahmeregal zu gelangen.

Am Entnahmeregal angekommen, kommuniziert das mobile Regal die Aufträge automatisch an das Entnahmeregal (z.B. gemäß Verfahren 1100). Am Entnahmeregal befinden sich z.B. Kisten oder Entnahmefächer, die mit oben beschriebenen RFID-Transpondern inkl. LEDs ausgestattet sind. Das statische Regal lässt z.B. gemäß Verfahren 300 alle Transponder LEDs aufleuchten, die zu den Aufträgen des mobilen Regals gehören. Sobald der Kommissionierer in ein Entnahmefach hineingreift, wird erkannt in welches er hineingreift. Fehler werden somit erkannt. Greift er in ein richtiges Entnahmeregal, wird die Entnahme automatisch quittiert und dem Kommissionierwagens mitgeteilt, welcher Artikel entnommen wurde. Gemäß dem Verfahren 500 steuert der Kommissionierwagen die LEDs seiner dazu gemäß Auftrag passenden Ablagefächer an, so dass der Kommissionierer diese automatisch angezeigt bekommt. Fehlablagen werden erneut mittels Armband am Handgelenk des Kommissionierers erkannt. Sobald eine korrekte Ablage erfolgt ist, wird die Ablage quittiert und ein neuer Artikel aus dem statischen Regal kann entnommen werden.

Durch die Zuordnung der Artikel zu den Transpondern und nicht den Fächern, können die Kisten beliebig im Regal sortiert werden. Vertauschte Einsortierungen der Kisten führen zu keinen Fehlern, wie dies bei Fach-Zuordnung der Fall wäre. Vorteilhafter muss der Kommissionierer keinen Scanner mitführen. Zudem erfolgen zeitaufwendige Quittierungen automatisch und Fehlgriffe werden automatisch erkannt. Ein flexibles PbL-System wird ermöglicht.

Nachfolgend werden zwei Abläufe für die Multikommissionierung bei Verwendung der IndLoc®-Technologie nochmals detaillierter dargestellt.

Beim ersten Ablauf wird davon ausgegangen, dass die Regale und Kommissionierwagen nicht untereinander kommunizieren können. Der Kommissionierer ist neben einem passiven Armband mit IndLoc®-Technologie, dem Kommissionierwagen und seinem Auftragszettel auch mit einem Scanner ausgestattet.

Zu Beginn seiner Tätigkeit scannt der Kommissionierer seinen Kommissionierwagen (z.B. einen daran angebrachten Barcode) mit seinem mobilen Scanner, um seine Aufträge und zugehörige Informationen zu sehen. Der Kommissionierer begibt sich zum Regalfach mit der nächsten, gemäß Auftrag zu kommissionierenden Ware (ggf. geführt durch ein Pick-by-X-System). Der Kommissionierer scannt den Barcode am Regal. Über den Scanner wird durch das Back-End-System das PbL-System des Regals sowie des Kommissionierwagen angesteuert und die entsprechenden Fächer leuchten auf.

Während des Kommissioniervorgangs entnimmt der Kommissionierer den Artikel aus dem entsprechenden Fach. Gemäß Verfahren 300 erfolgt die Quittierung der Entnahme automatisch durch die Erfassung des Armbands durch das statische Kommissionierregal. Der Kommissionierer legt den Artikel anschließend in den zugehörigen Auftragsbehälter seines Kommissionierwagens. Die Quittierung des Ablegens erfolgt gemäß Verfahren 500 automatisch durch die Erfassung des Armbands durch den Kommissionierwagen. Der Kommissionier beginnt den Kommissioniervorgang erneut bis die benötigte Anzahl des Artikels kommissioniert ist.

Beim zweiten Ablauf wird davon ausgegangen, dass die Regale und Kommissionierwagen miteinander kommunizieren können. Die Ausstattung des Kommissionierers ist wiederum die gleiche.

Zu Beginn des Auftrags scannt der Kommissionierer beispielsweise seinen Kommissionierwagen wieder mit seinem mobilen Scanner, um seine Aufträge und zugehörige Informationen zu sehen. Alternativ kann sich der Kommissionierer gemäß dem Verfahren 1300 auch an seinen Wagen dadurch registrieren, dass er sein Armband z.B. an eine festgelegte Leseposition hält. Seine Aufträge und zugehörigen Informationen können ihm dann je nach verfügbarer und gewünschter Systeme des Unternehmens an einem tragbaren Display, seinem Scanner o. ä. dargestellt werden.

Der Kommissionierer begibt sich dann wieder zum Regalfach mit der nächsten, gemäß Auftrag, zu kommissionierenden Ware (ggf. geführt durch ein Pick-by-X-System). Optional kann gemäß dem Verfahren 1300 auch eine Führung bzw. Navigation zum nächsten Regalfach stattfinden, da die Ortsinformationen aus der Kommunikation zwischen mobilem Kommissionierwagen und statischem System bekannt sind.

Der mobile Kommissionierwagen meldet sich beim statischen Kommissionierregal gemäß Verfahren 1100 automatisch an. Entweder direkt oder durch das Back-End-System wird das PbL System des Regals sowie des mobilen Wagens angesteuert und die entsprechenden Fächer leuchten auf.

Während des Kommissioniervorgangs entnimmt der Kommissionierer den Artikel aus dem entsprechenden Fach. Gemäß Verfahren 300 erfolgt die Quittierung der Entnahme automatisch durch die Erfassung des Armbands durch das statische Kommissionierregal. Der Kommissionierer legt den Artikel anschließend in den zugehörigen Auftragsbehälter seines Kommissionierwagens. Die Quittierung des Ablegens erfolgt gemäß Verfahren 500 automatisch durch die Erfassung des Armbands durch den Kommissionierwagen. Das statische Regal kann gemäß dem Verfahren 1100 hierbei dem mobilen Wagen den entnommenen Artikel kommunizieren, der Wagen signalisiert gemäß dem Verfahren 500 dann über sein integriertes Putto-X-System den Ablageort. Der Kommissionier beginnt den Kommissioniervorgang erneut bis die benötigte Anzahl des Artikels kommissioniert ist. Anschließend kommissioniert der Kommissionierer den nächsten Artikel bis alle Aufträge vollständig sind.

Vorteilhafter kann sowohl das Scannen der Artikel als auch des bzw. der Regale entfallen. Zudem kann das manuelle Quittieren von Entnahme und Ablage von Artikeln entfallen. Ferner können sowohl Fehlgriffe bzw. Fehlentnahmen als auch Fehlablagen detektiert werden.

Ein weiteres Anwendungsszenario ist die Montageunterstützung. Die Montageunterstützung greift die Ansätze der vorbeschriebenen Multikommissionierung auf und ergänzt diese, um die durchgängige Nutzung der IndLoc®-Technologie in einer Fabrik (z.B. eine "Smart Factory") zu veranschaulichen. Hierzu werden Anwendungen im Lagerbereich ebenso wie an einer Montaglinie adressiert.

Bei der Einlagerung der Güter nach der Anlieferung in Regale mit IndLoc®-Systemen kann der Stellplatz der Güter entweder durch RFID-Tags in der Verpackung oder durch Lagerboxen mit integrierten RFID-Tags gemäß dem Verfahren 1500 automatisch erfasst werden.

Bei der Kommissionierung der Güter zur Bereitstellung in der Montagelinie kann die Kommissionierung wie oben beschrieben unterstützt werden. Beispielsweise ist hierzu eine PbL-Unterstützung für Transportboxen und Kleinladungsträger mittels Energy Harvesting ohne weitere Infrastruktur realisierbar.

Bei der Befüllung von Kleinladungsträgern für ein Bereitstellungsregal werden die RFID-Tags der Behälter mit dem jeweiligen Inhalt verknüpft (z. B. Kiste mit RFID-Tag "12345" enthält M8x40 Schrauben). Das Durchlaufbereitstellungsregal kennt gemäß dem Verfahren 1500 die Position der Kleinladungsträger und den zugehörigen Inhalt, so dass bei beliebiger Anordnung der Kleinladungsträger ein Pick-by-X ermöglicht werden kann (z.B. werden die im Kleinladungsträger integrierten LEDs werden für eine PbL-Unterstützung genutzt). Die Entnahme von Kleinladungsträgern aus dem Bereitstellungsregal wird gemäß dem Verfahren 100 detektiert, so dass eine rechtzeitige Nachfüllung ausgelöst werden kann.

Durch die durchgängige Erfassung von Behälter-IDs, Soll-Inhalt und Quittierung der Befüllung wird die vollständige Zusammenstellung des Materials für die einzelnen Arbeitsschritte sichergestellt.

Am Montageplatz kann der Werker sich das angelieferte Material an seinem Arbeitsplatz beliebig ins Regal einsortieren, da das IndLoc®-System die Position der einzelnen Kleinladungsträger gemäß dem Verfahren 1500 automatisch erkennt. Der vollständige Empfang des benötigten Materials kann somit automatisch quittiert werden und damit zum Beispiel in einer dezentralen Fertigung die Anfahrt einer Montageplattform auslösen. Bei unvollständigem Empfang kann automatisch eine Nachlieferung angefordert werden. Ebenso kann ein PbL-System oder ein Montageunterstützungssystem angesteuert werden.

Bei der Montage können die in den Kleinladungsträgern integrierten LEDs gemäß dem Verfahren 300 genutzt werden, um dem Werker die benötigten Teile für den nächsten Arbeitsschritt anzuzeigen. Die Entnahme von Bauteilen wird über das Armband des Werkers zudem erfasst. Die korrekte Entnahme kann so quittiert und bei Bedarf mit weiteren Daten wie bspw. Anzugsdrehmomenten verknüpft werden. Die Anzugsmomente könnten z.B. an einem kleinen elektrophoretischen Display am Armband visualisiert werden. Über Drittsysteme kann ferner z.B. die Montagestelle angezeigt werden. Bei zeitlich austauschbaren Arbeitsschritten kann eine Zuordnung des möglichen und gewählten Schritts die weitere PbL-Signalisierung auslösen.

Durch die Verwendung der vorgeschlagenen Technologie kann zudem beispielsweise erreicht werden, dass in der Qualitätskontrolle durchgängige Datensätze mit Informationen zu(r) a) verbauten Komponenten und Kleinteilen, b) Vollständigkeit der Komponenten und c) Zuordnung zwischen Sollkomponente, Istkomponente und Anzugsdrehmomenten vorliegen.

Mit der vorgeschlagenen Technologie können Abläufe in den einzelnen Anwendungsszenarien somit effizienter und flexibler gestalten werden.

Ausführungsbeispiele der vorliegenden Offenbarung betreffen somit unter anderem:
- Selbstlokalisierung der mobilen Regale mit IndLoc®-Technologie
- Kommunikation der mobilen und stationären Regale untereinander über IndLoc®-Technologie
- Automatisches Auslesen der Aufträge
- Passive LF oder HF Transponder mit LED und Ansteuerung gemäß Auftrag
- Passive LF oder HF Transponder mit Display und Ansteuerung gemäß Auftrag
- Kopplung von Kistenlokalisierung und PbL-Führung des Kommissioniers
- Leere Kisten werden automatisch erkannt durch RFID Lokalisierung
- Steuerung / Kommunikation des Kommissionierers mit dem System über Bewegungsmuster des Armbands
- Automatische Übermittlung der Aufträge zwischen den Entnahme- und Ablageregalen

Es ist zu beachten, dass die in den Figuren dargestellten Anbringungspositionen der einzelnen Elemente (Sensoren, Erregerelement, etc.) an Regalen, Lagerbehältern, Kommissionierwägen oder sonstigen Objekten rein beispielhaft sind und lediglich der Illustration der vorgeschlagenen Technologie dienen. Gemäß der vorgeschlagenen Technologie können die einzelnen Elemente auch an anderen Anbringungspositionen als den in den Figuren gezeigten Anbringungspositionen an den Regalen, Lagerbehältern, Kommissionierwagen oder sonstigen Objekten angebracht sein.

Die hierin beschriebenen Ausführungsbeispiele können wie folgt zusammengefasst werden:
(1) Verfahren zum Bestimmen, ob ein in einem Regal gelagerter Lagerbehälter geleert wurde, wobei der Lagerbehälter mit einem RFID-Transponder versehen ist, umfassend:
   Erzeugen eines magnetischen Erregerfeldes mittels zumindest eines am Regal angebrachten Erregerelements;
   Bestimmen einer Mehrzahl an Messwerten für ein von dem RFID-Transponder aufgrund des magnetischen Erregerfeldes ausgeprägtes magnetisches Antwortfeld mittels einer Mehrzahl von am Regal angebrachten Sensoren;
   Bestimmen einer Position oder einer Bewegungstrajektorie des RFID-Transponders basierend auf der Mehrzahl an Messwerten; und
   Bestimmen, dass der Lagerbehälter geleert wurde, falls die Position des RFID-Transponders sich außerhalb eines dem Regal zugeordneten Raumbereichs befindet oder die Bewegungstrajektorie eine Bewegung des RFID-Transponders aus dem dem Regal zugeordneten Raumbereich anzeigt.
(2) Verfahren nach (1), wobei das Verfahren ferner Folgendes umfasst:
   Senden einer Nachricht an ein System zur Überwachung der Befüllung des Regals, die anzeigt, dass der der Lagerbehälter geleert wurde.
(3) Verfahren nach (1) oder (2), wobei der RFID-Transponder ein passiver RFID-Transponder ist.
(4) Verfahren zum Bestätigen, dass von einem Kommissionierer ein zu entnehmendes Objekt aus einem Regal entnommen wurde, wobei der Kommissionierer ein Wearable trägt, das Verfahren umfassend:
   Erzeugen eines magnetischen Erregerfeldes mittels zumindest eines am Regal angebrachten Erregerelements;
   Bestimmen einer Mehrzahl an Messwerte für ein von dem Wearable aufgrund des magnetischen Erregerfeldes ausgeprägtes magnetisches Antwortfeld mittels einer Mehrzahl von am Regal angebrachten Sensoren;
   Bestimmen einer Position oder einer Bewegungstrajektorie des Wearable basierend auf der Mehrzahl an Messwerten mittels einer am Regal angebrachte Prozessierschaltung;
   Bestimmen mittels der Prozessierschaltung, dass der Kommissionierer das zu entnehmende Objekt aus dem Regal entnommen hat, falls die Position des Wearable sich innerhalb eines dem zu entnehmenden Objekt zugeordneten Raumbereichs befindet oder die Bewegungstrajektorie eine Bewegung des Wearable in den dem zu entnehmenden Objekt zugeordneten Raumbereich anzeigt; und
   Senden einer Nachricht an ein System zur Überwachung des Regals, die anzeigt, dass der Kommissionierer das zu entnehmende Objekt aus dem Regal entnommen hat.
(5) Verfahren nach (4), ferner umfassend:
   Bestimmen mittels der Prozessierschaltung, dass der Kommissionierer ein nicht zu entnehmendes Objekt aus dem Regal entnommen hat, falls die Position des Wearable sich innerhalb eines einem weiteren in dem Regal gelagerten Objekt zugeordneten Raumbereichs befindet oder die Bewegungstrajektorie eine Bewegung des Wearable in den dem weiteren Objekt zugeordneten Raumbereich anzeigt; und
   Senden einer Nachricht an das System zur Überwachung des Regals, die anzeigt, dass der Kommissionierer das nicht zu entnehmende Objekt aus dem Regal entnommen hat.
(6) Verfahren nach (4) oder (5), wobei das zu entnehmende Objekt, ein in dem Regal gelagerter Lagerbehälter mit dem zu entnehmenden Objekt oder ein dem zu entnehmenden Objekt zugeordneter Teilbereich des Regals mit einem RFID-Transponder versehen ist, wobei
   der RFID-Transponder mit einem Leuchtmittel gekoppelt ist, und wobei das Verfahren ferner Folgendes umfasst:
   Empfangen von Informationen über das zu entnehmende Objekt durch die Prozessierschaltung;
   Ansteuern des Erregerelements mittels der Prozessierschaltung, um das magnetische Erregerfeld mit einem Befehl für den RFID-Transponder zu kodieren, so dass der RFID-Transponder das Leuchtmittel bei Empfang des Befehls aktiviert und mittels aus dem magnetischen Erregerfeld gewonnener elektrischer Energie versorgt.
(7) Verfahren nach (6), ferner umfassend:
   falls bestimmt wurde, dass der Kommissionierer das zu entnehmende Objekt aus dem Regal entnommen hat, Ansteuern des Erregerelements mittels der Prozessierschaltung, um das magnetische Erregerfeld mit einem weiteren Befehl für den RFID-Transponder zu kodieren, so dass der RFID-Transponder das Leuchtmittel bei Empfang des weiteren Befehls deaktiviert.
(8) Verfahren nach einem von (4) bis (7), wobei das zu entnehmende Objekt, ein in dem Regal gelagerter Lagerbehälter mit dem zu entnehmenden Objekt oder ein dem zu entnehmenden Objekt zugeordneter Teilbereich des Regals mit einem RFID-Transponder versehen ist, wobei der RFID-Transponder mit einem Anzeigeelement gekoppelt ist, und wobei das Verfahren ferner Folgendes umfasst:
   Empfangen von Informationen über das zu entnehmende Objekt durch die Prozessierschaltung; und
   Ansteuern des Erregerelements mittels der Prozessierschaltung, um das magnetische Erregerfeld mit einem Befehl für den RFID-Transponder zu kodieren, so dass der RFID-Transponder das Anzeigeelement bei Empfang des Befehls mittels aus dem magnetischen Erregerfeld gewonnener elektrischer Energie versorgt und das Anzeigemittel die Informationen anzeigt.
(9) Verfahren nach einem von (6) bis (8), ferner umfassend:
   Messen eines magnetischen Feldes von einem Kommissionierwagen des Kommissionierers mittels der Mehrzahl von am Regal angebrachten Sensoren, wobei das magnetische Feld mit den Informationen über das zu entnehmende Objekt kodiert ist.
(10) Verfahren zum Bestätigen, dass von einem Kommissionierer ein abzulegendes Objekt in einem gewünschten Bereich eines Kommissionierwagens abgelegt wurde, wobei der Kommissionierer ein Wearable trägt, umfassend:
   Erzeugen eines magnetischen Erregerfeldes mittels zumindest eines am Kommissionierwagen angebrachten Erregerelements;
   Bestimmen einer Mehrzahl an Messwerten für ein von dem Wearable aufgrund des magnetischen Erregerfeldes ausgeprägtes magnetisches Antwortfeld mittels einer Mehrzahl von am Kommissionierwagen angebrachten Sensoren;
   Bestimmen einer Position oder einer Bewegungstrajektorie des Wearable basierend auf der Mehrzahl an Messwerten mittels einer am Kommissionierwagen angebrachten Prozessierschaltung;
   Bestimmen mittels der Prozessierschaltung, dass der Kommissionierer das abzulegende Objekt in dem gewünschten Bereich des Kommissionierwagens abgelegt hat, falls die Position des Wearable sich innerhalb des gewünschten Bereichs des Kommissionierwagens befindet oder die Bewegungstrajektorie eine Bewegung des Wearable in den gewünschten Bereich des Kommissionierwagens anzeigt; und
   Senden einer Nachricht an ein System zur Überwachung des Kommissionierwagens, die anzeigt, dass der Kommissionierer das abzulegende Objekt in dem gewünschten Bereich des Kommissionierwagens abgelegt hat.
(11) Verfahren nach (10), ferner umfassend:
   Bestimmen mittels der Prozessierschaltung, dass der Kommissionierer das abzulegende Objekt in einem unerwünschten Bereich des Kommissionierwagens abgelegt hat, falls die Position des Wearable sich in einem von dem gewünschten Bereich verschiedenen Bereich des Kommissionierwagens befindet oder die Bewegungstrajektorie eine Bewegung des Wearable in den von dem gewünschten Bereich verschiedenen Bereich des Kommissionierwagens anzeigt; und
   Senden einer Nachricht an das System zur Überwachung des Kommissionierwagens, die anzeigt, dass der Kommissionierer das abzulegende Objekt in dem unerwünschten Bereich des Kommissionierwagens abgelegt hat.
(12) Verfahren nach (10) oder (11), wobei der gewünschte Bereich des Kommissionierwagens oder ein in dem gewünschten Bereich des Kommissionierwagens befindlicher Lagerbehälter für das abzulegende Objekt mit einem RFID-Transponder versehen ist, wobei der RFID-Transponder mit einem Leuchtmittel gekoppelt ist, und wobei das Verfahren ferner Folgendes umfasst:
   Empfangen von Information über das abzulegende Objekt durch die Prozessierschaltung;
   Ansteuern des Erregerelements mittels der Prozessierschaltung, um das magnetische Erregerfeld mit einem Befehl für den RFID-Transponder zu kodieren, so dass der RFID-Transponder das Leuchtmittel bei Empfang des Befehls aktiviert und mittels aus dem magnetischen Erregerfeld gewonnener elektrischer Energie versorgt.
(13) Verfahren nach (12), ferner umfassend:
   falls bestimmt wurde, dass der Kommissionierer das abzulegende Objekt in dem gewünschten Bereich des Kommissionierwagens abgelegt hat, Ansteuern des Erregerelements mittels der Prozessierschaltung, um das magnetische Erregerfeld mit einem weiteren Befehl für den RFID-Transponder zu kodieren, so dass der RFID-Transponder das Leuchtmittel bei Empfang des weiteren Befehls deaktiviert.
(14) Verfahren nach (12) oder (13), ferner umfassend:
   Messen eines magnetischen Feldes von einem Regal, aus dem der Kommissionierer das abzulegende Objekt entnommen hat, mittels der Mehrzahl von am Kommissionierwagen angebrachten Sensoren, wobei das magnetische Feld mit den Informationen über das abzulegende Objekt kodiert ist.
(15) Verfahren nach einem von (4) bis (14), wobei das Wearable zumindest eine passive Spule oder eine aktive Spule zum Ausprägen des magnetischen Antwortfelds aufgrund des magnetischen Erregerfeldes umfasst.
(16) Verfahren für einen Kommissionierwagen, umfassend:
   Erzeugen eines magnetischen Erregerfeldes mittels zumindest eines am Kommissionierwagen angebrachten Erregerelements;
   Bestimmen von Messwerten für eines oder mehrere weitere magnetische Erregerfelder mittels zumindest eines am Kommissionierwagen angebrachten Sensors, wobei das eine oder die mehreren weiteren magnetischen Erregerfelder von jeweiligen an einem oder mehreren, feststehenden Regalen angebrachten Erregerelementen erzeugt werden; und
   Bestimmen einer momentanen Position des Kommissionierwagens mittels einer am Kommissionierwagen angebrachte Prozessierschaltung basierend auf den Messwerten für das eine oder die mehreren weiteren magnetischen Erregerfelder.
(17) Verfahren nach (16), wobei die Messwerte für das eine oder die mehreren weiteren magnetischen Erregerfelder Feldstärken des einen oder der mehreren weiteren magnetischen Erregerfelder anzeigen, und wobei das Bestimmen der momentanen Position des Kommissionierwagens ein Bestimmen der momentanen Position des Kommissionierwagens basierend auf den Feldstärken des einen oder der mehreren weiteren magnetischen Erregerfelder umfasst.
(18) Verfahren nach (17), wobei die momentane Position des Kommissionierwagens eine relative Position des Kommissionierwagens zu dem einen oder den mehreren, feststehenden Regalen ist.
(19) Verfahren nach (17), wobei das eine oder die mehreren weiteren magnetischen Erregerfelder mit Informationen über die jeweiligen Positionen der feststehenden Regale kodiert sind oder wobei die jeweiligen Positionen der feststehenden Regale in einem von der Prozessierschaltung auslesbaren Speicher gespeichert sind, und das Bestimmen der momentanen Position des Kommissionierwagens ferner auf den Informationen über die jeweiligen Positionen der feststehenden Regale basiert.
(20) Verfahren nach (19), wobei die momentane Position des Kommissionierwagens eine Absolutposition des Kommissionierwagens ist.
(21) Verfahren nach einem von (16) bis (20), ferner umfassend:
   Empfangen von Informationen durch die Prozessierschaltung, die eines oder mehrere der feststehenden Regale anzeigen, aus dem bzw. denen ein Kommissionierer ein Objekt in den Kommissionierwagen zu laden hat;
   bestimmen einer Route zu dem oder den feststehenden Regale, aus dem bzw. denen ein Kommissionierer ein Objekt in den Kommissionierwagen zu laden hat, basierend auf der momentanen Position des Kommissionierwagens.
(22) Verfahren für ein Regal, umfassend:
   Erzeugen eines ersten magnetischen Erregerfeldes mittels zumindest eines am Regal angebrachten Erregerelements;
   Bestimmen von Messwerten für ein von einem Kommissionierwagen als Reaktion auf den Empfang des ersten magnetischen Erregerfeldes erzeugtes zweites magnetisches Erregerfeld mittels zumindest eines am Regal angebrachten Sensors; und
   Bestimmen einer momentanen Position des Kommissionierwagens mittels einer am Regal angebrachte Prozessierschaltung basierend auf den Messwerten für das zweite magnetische Erregerfeld; und
   Senden von Informationen über die Position des Kommissionierwagens an den Kommissionierwagen.
(23) Verfahren nach (22), wobei das Senden der Informationen über die Position des Kommissionierwagens Folgendes umfasst:
   Ansteuern des Erregerelements durch die Prozessierschaltung, das erste magnetische Erregerfeld mit den Informationen über die Position des Kommissionierwagens zu kodieren; oder
   Senden einer Nachricht mit den Informationen über die Position des Kommissionierwagens an ein Computer-System, das mit dem Kommissionierwagen kommunizieren kann.
(24) Verfahren zur Kommunikation, umfassend:
   Erzeugen eines ersten magnetischen Erregerfeldes mittels zumindest eines am Kommissionierwagen angebrachten Erregerelements, wobei das erste magnetische Erregerfeld mit vom Kommissionierwagen zu übermittelnden Informationen kodiert ist;
   Bestimmen einer Mehrzahl an ersten Messwerten für das erste magnetische Erregerfeld mittels einer Mehrzahl von an einem Regal angebrachten Sensoren;
   Bestimmen der vom Kommissionierwagen zu übermittelnden Informationen aus der Mehrzahl an ersten Messwerten mittels einer am Regal angebrachten Prozessierschaltung; Erzeugen eines zweiten magnetischen Erregerfeldes mittels zumindest eines am Regal angebrachten Erregerelements, wobei das zweite magnetische Erregerfeld mit vom Regal zu übermittelnden Informationen kodiert ist;
   Bestimmen einer Mehrzahl an zweiten Messwerten für das zweite magnetische Erregerfeld mittels einer Mehrzahl von am Kommissionierwagen angebrachten Sensoren; und
   Bestimmen der vom Regal zu übermittelnden Informationen aus der Mehrzahl an zweiten Messwerten mittels einer am Kommissionierwagen angebrachte Prozessierschaltung.
(25) Verfahren nach (24), wobei die am Kommissionierwagen angebrachte Prozessierschaltung das am Kommissionierwagen angebrachte Erregerelement ansteuert, das erste magnetische Erregerfeld zu erzeugen, wenn die Prozessierschaltung feststellt, dass sich der Kommissionierwagen innerhalb eines vorbestimmten Bereichs um das Regal befindet, und wobei die vom Kommissionierwagen zu übermittelnden Informationen Informationen über eines oder mehrere von einem Kommissionierer aus dem Regal zu entnehmende Objekte umfassen.
(26) Verfahren nach (24) oder (25), wobei die am Regal angebrachte Prozessierschaltung das am Regal angebrachte Erregerelement ansteuert, das zweite magnetische Erregerfeld zu erzeugen, wenn die Prozessierschaltung feststellt, dass von einem Kommissionierer ein im Kommissionierwagen abzulegendes Objekt aus dem Regal entnommen wurde, und wobei die vom Regal zu übermittelnden Informationen Informationen über das im Kommissionierwagen abzulegende Objekt umfassen.
(27) Verfahren für einen Kommissionierwagen, umfassend:
   Erzeugen eines magnetischen Erregerfeldes mittels zumindest eines am Kommissionierwagen angebrachten Erregerelements;
   Bestimmen einer Mehrzahl an Messwerten für ein von einem RFID-Transponder aufgrund des magnetischen Erregerfeldes ausgeprägtes magnetisches Antwortfeld mittels einer Mehrzahl von am Kommissionierwagen angebrachten Sensoren, wobei der RFID-Transponder mit einem Lagerbehälter, der auf dem Kommissionierwagen angeordnet ist, gekoppelt ist, und wobei das magnetische Antwortfeld mit Informationen über eines oder mehrere in den Lagerbehälter zu packende Objekte kodiert ist; und
   Bestimmen der Informationen über das eine oder die mehreren in den Lagerbehälter zu packende Objekte aus der Mehrzahl an Messwerten mittels einer am Kommissionierwagen angebrachte Prozessierschaltung.
(28) Verfahren nach (27), ferner umfassend:
   Abrufen von Informationen über eines oder mehrere Regale, in dem bzw. in denen das eine oder die mehreren in den Lagerbehälter zu packenden Objekte gelagert sind, durch die Prozessierschaltung; und
   Ansteuern des Erregerelements durch die Prozessierschaltung, das magnetische Erregerfeld mit Informationen über eines oder mehrere der in den Lagerbehälter zu packenden Objekte, die in einem Regal gelagert sind, zu kodieren, wenn die Prozessierschaltung feststellt, dass sich der Kommissionierwagen innerhalb eines vorbestimmten Bereichs um dieses Regal befindet.
(29) Verfahren nach (28), ferner umfassend:
   Bestimmen einer Route zu einem Regal, in dem eines oder mehrere der in den Lagerbehälter zu packenden Objekte gelagert sind, mittels der Prozessierschaltung basierend auf einer momentanen Position des Kommissionierwagens und den Informationen über das eine oder die mehreren Regale, in dem bzw. in denen das eine oder die mehreren in den Lagerbehälter zu packenden Objekte gelagert sind; und
   Ansteuern eines am Kommissionierwagen angebrachten Anzeigeelements mittels der Prozessierschaltung, Informationen über die Route zu dem Regal anzuzeigen.
(30) Verfahren für einen Kommissionierwagen, umfassend:
   Erzeugen eines magnetischen Erregerfeldes mittels zumindest eines am Kommissionierwagen angebrachten Erregerelements;
   Bestimmen einer Mehrzahl an Messwerten für ein von einem Wearable eines Kommissionierers aufgrund des magnetischen Erregerfeldes ausgeprägtes magnetisches Antwortfeld mittels einer Mehrzahl von am Kommissionierwagen angebrachten Sensoren; und
   Bestimmen einer Zuordnung des Kommissionierers zu dem Kommissionierwagen mittels einer am Kommissionierwagen angebrachten Prozessierschaltung basierend auf der Mehrzahl an Messwerten.
(31) Verfahren nach (30), wobei das Bestimmen der Zuordnung des Kommissionierers zu dem Kommissionierwagen Folgendes umfasst:
   Bestimmen einer Position oder einer Bewegungstrajektorie des Wearable basierend auf der Mehrzahl an Messwerten;
   Vergleichen der Position oder der Bewegungstrajektorie des Wearable mit zumindest einer Referenzposition oder einer Referenzbewegungstrajektorie; und
   Bestimmen der Zuordnung des Kommissionierers zu dem Kommissionierwagen falls die Position oder die Bewegungstrajektorie des Wearable mit der Referenzposition oder der Referenzbewegungstrajektorie übereinstimmt.
(32) Verfahren nach (30) oder (31), ferner umfassend:
   Abrufen von Informationen über eines oder mehrere von dem dem Kommissionierwagen zugeordneten Kommissionierer in den Kommissionierwagen zu ladende Objekte durch die Prozessierschaltung; und
   Ansteuern eines am Kommissionierwagen angebrachten Anzeigeelements mittels der Prozessierschaltung, Informationen betreffend das eine oder die mehreren von dem Kommissionierer in den Kommissionierwagen zu ladenden Objekte anzuzeigen.
(33) Verfahren zum Erkennen eines Befehls oder einer Information eines Kommissionierers, wobei der Kommissionierer ein Wearable trägt, umfassend:
   Erzeugen eines magnetischen Erregerfeldes mittels zumindest eines an einem Kommissionierwagen oder einem Regal angebrachten Erregerelements;
   Bestimmen einer Mehrzahl an Messwerten für ein von dem Wearable aufgrund des magnetischen Erregerfeldes ausgeprägtes magnetisches Antwortfeld mittels einer Mehrzahl von am Kommissionierwagen oder am Regal angebrachten Sensoren;
   Bestimmen einer Position oder einer Bewegungstrajektorie des Wearable basierend auf der Mehrzahl an Messwerten;
   Vergleichen der Position oder der Bewegungstrajektorie des Wearable mit einer oder mehreren Referenzpositionen oder Referenzbewegungstrajektorien, wobei den Referenzpositionen oder Referenzbewegungstrajektorien jeweils ein zu übermittelnder Befehl des Kommissionierers oder eine zu übermittelnde Information des Kommissionierers zugeordnet ist; und Bestimmen desjenigen zu übermittelnden Befehls oder derjenigen zu übermittelnden Information des Kommissionierers als Befehl oder Information des Kommissionierers, dessen bzw. deren zugeordnete Referenzposition oder Referenzbewegungstrajektorie mit der Position oder der Bewegungstrajektorie des Wearable übereinstimmt.
(34) Verfahren nach (33), wobei das Wearable zumindest eine passive Spule oder eine aktive Spule zum Ausprägen des magnetischen Antwortfelds aufgrund des magnetischen Erregerfeldes umfasst.
(35) Verfahren für ein Regal, umfassend:
   Erzeugen eines magnetischen Erregerfeldes mittels zumindest eines am Regal angebrachten Erregerelements;
   Bestimmen einer Mehrzahl an Messwerten für ein von dem RFID-Transponder aufgrund des magnetischen Erregerfeldes ausgeprägtes magnetisches Antwortfeld mittels einer Mehrzahl von am Regal angebrachten Sensoren, wobei ein in dem Regal gelagertes Objekt oder ein in dem Regal gelagerter Lagerbehälter des Objekts mit dem RFID-Transponder versehen ist, und wobei das magnetische Antwortfeld mit Informationen über das Objekt kodiert ist; Bestimmen einer Position des RFID-Transponders mittels einer am Regal angebrachten Prozessierschaltung basierend auf der Mehrzahl an Messwerten; und
   Zuordnen eines vorbestimmten Raumbereichs des Regals zu dem Objekt mittels der Prozessierschaltung basierend auf der Position des RFID-Transponders.
(36) Verfahren nach (35), ferner umfassend
   Bestimmen von Informationen über das Objekt mittels der Prozessierschaltung basierend auf der Mehrzahl an Messwerten; und
   Zuordnen der Informationen über das Objekt zu dem dem Objekt zugeordneten Raumbereich.
(37) Verfahren nach (35) oder (36), ferner umfassend:
   Empfangen von Information, dass das Objekt durch einen Kommissionierer aus dem Regal zu entnehmen ist, durch die Prozessierschaltung;
   Ansteuern des Erregerelements mittels der Prozessierschaltung, um das magnetische Erregerfeld mit einem Befehl für den RFID-Transponder zu kodieren, so dass der RFID-Transponder das Leuchtmittel bei Empfang des Befehls aktiviert und mittels aus dem magnetischen Erregerfeld gewonnener elektrischer Energie versorgt.
(38) Verfahren nach einem von (1) bis (37), wobei das Bestimmen einer Position eines RFID-Transponders Folgendes umfasst:
   Bestimmen eines jeweiligen Korrelationsgrads für jeden der Mehrzahl an Messwerten mit einem Referenzsignal, wobei das Referenzsignal auf einer dem RFID-Transponder zugeordneten Datensequenz basiert; und
   Bestimmen einer Position des RFID-Transponders basierend auf den Korrelationsgraden der Mehrzahl an Messsignalen.
(39) RFID-System, umfassend:
   einen induktiv koppelnden, passiven RFID-Transponder; und
   ein Leuchtmittel, das mit dem RFID-Transponder gekoppelt ist,
   wobei der RFID-Transponder eingerichtet ist, bei Empfang eines in ein magnetisches Erregerfeld für den RFID-Transponder kodierten Befehls, das Leuchtmittel zu aktivieren und mit aus dem magnetischen Erregerfeld gewonnener elektrischer Energie zu versorgen.
(40) RFID-System nach (39), wobei der RFID-Transponder eingerichtet ist, bei Empfang eines weiteren in das magnetische Erregerfeld kodierten Befehls, das Leuchtmittel zu deaktivieren.
(41) RFID-System, umfassend:
   einen induktiv koppelnden, passiven RFID-Transponder; und
   ein Anzeigeelement, das mit dem RFID-Transponder gekoppelt ist,
   wobei der RFID-Transponder eingerichtet ist, bei Empfang eines in ein magnetisches Erregerfeld für den RFID-Transponder kodierten Befehls, das Anzeigeelement mit aus dem magnetischen Erregerfeld gewonnener elektrischer Energie zu versorgen und das Anzeigeelement anzusteuern, in dem Befehl enthaltene Informationen anzuzeigen.
(42) Verwendung eines RFID-Systems gemäß einem von (39) bis (41) in einem der Verfahren gemäß einem von (1) bis (38).

Die Aspekte und Merkmale, die zusammen mit einem oder mehreren der vorher detaillierten Beispiele und Figuren beschrieben sind, können auch mit einem oder mehreren der anderen Beispiele kombiniert werden, um ein gleiches Merkmal des anderen Beispiels zu ersetzen oder um das Merkmal in das andere Beispiel zusätzlich einzuführen.

Durch die Beschreibung und Zeichnungen werden nur die Grundsätze der Offenbarung dargestellt. Weiterhin sollen alle hier aufgeführten Beispiele grundsätzlich ausdrücklich nur illustrativen Zwecken dienen, um den Leser beim Verständnis der Grundsätze der Offenbarung und der durch die Erfinder beigetragenen Konzepte zur Weiterentwicklung der Technik zu unterstützen. Alle hiesigen Aussagen über Grundsätze, Aspekte und Beispiele der Offenbarung sowie konkrete Beispiele derselben umfassen deren Entsprechungen.

Ein Blockdiagramm kann zum Beispiel ein grobes Schaltdiagramm darstellen, das die Grundsätze der Offenbarung implementiert. Auf ähnliche Weise können ein Flussdiagramm, ein Ablaufdiagramm, ein Zustandsübergangsdiagramm, ein Pseudocode und dergleichen verschiedene Prozesse, Operationen oder Schritte repräsentieren, die zum Beispiel im Wesentlichen in computerlesbarem Medium dargestellt und so durch einen Computer oder Prozessor ausgeführt werden, ungeachtet dessen, ob ein solcher Computer oder Prozessor explizit gezeigt ist. In der Beschreibung oder in den Patentansprüchen offenbarte Verfahren können durch ein Bauelement implementiert werden, das ein Mittel zum Ausführen eines jeden der jeweiligen Schritte dieser Verfahren aufweist.

Es versteht sich, dass die Offenbarung mehrerer, in der Beschreibung oder den Ansprüchen offenbarter Schritte, Prozesse, Operationen oder Funktionen nicht als in der bestimmten Reihenfolge befindlich ausgelegt werden soll, sofern dies nicht explizit oder implizit anderweitig, z. B. aus technischen Gründen, angegeben ist. Daher werden diese durch die Offenbarung von mehreren Schritten oder Funktionen nicht auf eine bestimmte Reihenfolge begrenzt, es sei denn, dass diese Schritte oder Funktionen aus technischen Gründen nicht austauschbar sind. Ferner kann bei einigen Beispielen ein einzelner Schritt, Funktion, Prozess oder Operation mehrere Teilschritte, -funktionen, -prozesse oder -operationen einschließen und/oder in dieselben aufgebrochen werden. Solche Teilschritte können eingeschlossen sein und Teil der Offenbarung dieses Einzelschritts sein, sofern sie nicht explizit ausgeschlossen sind.

Weiterhin sind die folgenden Ansprüche hiermit in die detaillierte Beschreibung aufgenommen, wo jeder Anspruch als getrenntes Beispiel für sich stehen kann. Während jeder Anspruch als getrenntes Beispiel für sich stehen kann, ist zu beachten, dass - obwohl ein abhängiger Anspruch sich in den Ansprüchen auf eine bestimmte Kombination mit einem oder mehreren anderen Ansprüchen beziehen kann - andere Beispiele auch eine Kombination des abhängigen Anspruchs mit dem Gegenstand jedes anderen abhängigen oder unabhängigen Anspruchs umfassen können. Solche Kombinationen werden hier explizit vorgeschlagen, sofern nicht angegeben ist, dass eine bestimmte Kombination nicht beabsichtigt ist. Ferner sollen auch Merkmale eines Anspruchs für jeden anderen unabhängigen Anspruch eingeschlossen sein, selbst wenn dieser Anspruch nicht direkt abhängig von dem unabhängigen Anspruch gemacht ist.

## Patentansprüche

1. Verfahren (100) zum Bestimmen, ob ein in einem Regal gelagerter Lagerbehälter geleert wurde, wobei der Lagerbehälter mit einem RFID-Transponder versehen ist, das Verfahren umfassend:
Erzeugen (102) eines magnetischen Erregerfeldes mittels zumindest eines am Regal angebrachten Erregerelements;
Bestimmen (104) einer Mehrzahl an Messwerten für ein von dem RFID-Transponder aufgrund des magnetischen Erregerfeldes ausgeprägtes magnetisches Antwortfeld mittels einer Mehrzahl von am Regal angebrachten Sensoren;
Bestimmen (106) einer Position oder einer Bewegungstrajektorie des RFID-Transponders basierend auf der Mehrzahl an Messwerten; und
Bestimmen (108), dass der Lagerbehälter geleert wurde, falls die Position des RFID-Transponders sich außerhalb eines dem Regal zugeordneten Raumbereichs befindet oder die Bewegungstrajektorie eine Bewegung des RFID-Transponders aus dem dem Regal zugeordneten Raumbereich anzeigt.

2. Verfahren (100) nach Anspruch 1, wobei das Verfahren ferner Folgendes umfasst:
Senden einer Nachricht an ein System zur Überwachung der Befüllung des Regals, die anzeigt, dass der der Lagerbehälter geleert wurde.

3. Verfahren (100) nach Anspruch 1 oder Anspruch 2, wobei der RFID-Transponder ein passiver RFID-Transponder ist.

4. Verfahren (300) zum Bestätigen, dass von einem Kommissionierer ein zu entnehmendes Objekt aus einem Regal entnommen wurde, wobei der Kommissionierer ein Wearable trägt, das Verfahren umfassend:
Erzeugen (302) eines magnetischen Erregerfeldes mittels zumindest eines am Regal angebrachten Erregerelements;
Bestimmen (304) einer Mehrzahl an Messwerte für ein von dem Wearable aufgrund des magnetischen Erregerfeldes ausgeprägtes magnetisches Antwortfeld mittels einer Mehrzahl von am Regal angebrachten Sensoren;
Bestimmen (306) einer Position oder einer Bewegungstrajektorie des Wearable basierend auf der Mehrzahl an Messwerten mittels einer am Regal angebrachte Prozessierschaltung;
Bestimmen (308) mittels der Prozessierschaltung, dass der Kommissionierer das zu entnehmende Objekt aus dem Regal entnommen hat, falls die Position des Wearable sich innerhalb eines dem zu entnehmenden Objekt zugeordneten Raumbereichs befindet oder die Bewegungstrajektorie eine Bewegung des Wearable in den dem zu entnehmenden Objekt zugeordneten Raumbereich anzeigt; und
Senden (310) einer Nachricht an ein System zur Überwachung des Regals, die anzeigt, dass der Kommissionierer das zu entnehmende Objekt aus dem Regal entnommen hat.

5. Verfahren (300) nach Anspruch 4, ferner umfassend:
Bestimmen (312) mittels der Prozessierschaltung, dass der Kommissionierer ein nicht zu entnehmendes Objekt aus dem Regal entnommen hat, falls die Position des Wearable sich innerhalb eines einem weiteren in dem Regal gelagerten Objekt zugeordneten Raumbereichs befindet oder die Bewegungstrajektorie eine Bewegung des Wearable in den dem weiteren Objekt zugeordneten Raumbereich anzeigt; und
Senden (314) einer Nachricht an ein System zur Überwachung des Regals, die anzeigt, dass der der Kommissionierer das nicht zu entnehmende Objekt aus dem Regal entnommen hat.

6. Verfahren (300) nach Anspruch 4 oder Anspruch 5, wobei das zu entnehmende Objekt, ein in dem Regal gelagerter Lagerbehälter mit dem zu entnehmenden Objekt oder ein dem zu entnehmenden Objekt zugeordneter Teilbereich des Regals mit einem RFID-Transponder versehen ist, wobei der RFID-Transponder mit einem Leuchtmittel gekoppelt ist, und wobei das Verfahren (300) ferner Folgendes umfasst:
Empfangen von Informationen über das zu entnehmende Objekt durch die Prozessierschaltung;
Ansteuern des Erregerelements mittels der Prozessierschaltung, um das magnetische Erregerfeld mit einem Befehl für den RFID-Transponder zu kodieren, so dass der RFID-Transponder das Leuchtmittel bei Empfang des Befehls aktiviert und mittels aus dem magnetischen Erregerfeld gewonnener elektrischer Energie versorgt.

7. Verfahren (300) nach Anspruch 6, ferner umfassend:
falls bestimmt wurde, dass der Kommissionierer das zu entnehmende Objekt aus dem Regal entnommen hat, Ansteuern des Erregerelements mittels der Prozessierschaltung, um das magnetische Erregerfeld mit einem weiteren Befehl für den RFID-Transponder zu kodieren, so dass der RFID-Transponder das Leuchtmittel bei Empfang des weiteren Befehls deaktiviert.

8. Verfahren (300) nach einem der Ansprüche 4 bis 7, wobei das zu entnehmende Objekt, ein in dem Regal gelagerter Lagerbehälter mit dem zu entnehmenden Objekt oder ein dem zu entnehmenden Objekt zugeordneter Teilbereich des Regals mit einem RFID-Transponder versehen ist, wobei der RFID-Transponder mit einem Anzeigeelement gekoppelt ist, und wobei das Verfahren (300) ferner Folgendes umfasst:
Empfangen von Informationen über das zu entnehmende Objekt durch die Prozessierschaltung; und
Ansteuern des Erregerelements mittels der Prozessierschaltung, um das magnetische Erregerfeld mit einem Befehl für den RFID-Transponder zu kodieren, so dass der RFID-Transponder das Anzeigeelement bei Empfang des Befehls mittels aus dem magnetischen Erregerfeld gewonnener elektrischer Energie versorgt und das Anzeigemittel die Informationen anzeigt.

9. Verfahren (300) nach einem der Ansprüche 6 bis 8, ferner umfassend:
Messen eines magnetischen Feldes von einem Kommissionierwagen des Kommissionierers mittels der Mehrzahl von am Regal angebrachten Sensoren, wobei das magnetische Feld mit den Informationen über das zu entnehmende Objekt kodiert ist.

10. Verfahren (500) zum Bestätigen, dass von einem Kommissionierer ein abzulegendes Objekt in einem gewünschten Bereich eines Kommissionierwagens abgelegt wurde, wobei der Kommissionierer ein Wearable trägt, umfassend:
Erzeugen (502) eines magnetischen Erregerfeldes mittels zumindest eines am Kommissionierwagen angebrachten Erregerelements;
Bestimmen (504) einer Mehrzahl an Messwerten für ein von dem Wearable aufgrund des magnetischen Erregerfeldes ausgeprägtes magnetisches Antwortfeld mittels einer Mehrzahl von am Kommissionierwagen angebrachten Sensoren;
Bestimmen (506) einer Position oder einer Bewegungstrajektorie des Wearable basierend auf der Mehrzahl an Messwerten mittels einer am Kommissionierwagen angebrachten Prozessierschaltung;
Bestimmen (508) mittels der Prozessierschaltung, dass der Kommissionierer das abzulegende Objekt in dem gewünschten Bereich des Kommissionierwagens abgelegt hat, falls die Position des Wearable sich innerhalb des gewünschten Bereichs des Kommissionierwagens befindet oder die Bewegungstrajektorie eine Bewegung des Wearable in den gewünschten Bereich des Kommissionierwagens anzeigt; und
Senden (510) einer Nachricht an ein System zur Überwachung des Kommissionierwagens, die anzeigt, dass der Kommissionierer das abzulegende Objekt in dem gewünschten Bereich des Kommissionierwagens abgelegt hat.

11. Verfahren (500) nach Anspruch 10, ferner umfassend:
Bestimmen (512) mittels der Prozessierschaltung, dass der Kommissionierer das abzulegende Objekt in einem unerwünschten Bereich des Kommissionierwagens abgelegt hat, falls die Position des Wearable sich in einem von dem gewünschten Bereich verschiedenen Bereich des Kommissionierwagens befindet oder die Bewegungstrajektorie eine Bewegung des Wearable in den von dem gewünschten Bereich verschiedenen Bereich des Kommissionierwagens anzeigt; und
Senden (514) einer Nachricht an das System zur Überwachung des Kommissionierwagens, die anzeigt, dass der Kommissionierer das abzulegende Objekt in dem unerwünschten Bereich des Kommissionierwagens abgelegt hat.

12. Verfahren (500) nach Anspruch 10 oder Anspruch 11, wobei der gewünschte Bereich des Kommissionierwagens oder ein in dem gewünschten Bereich des Kommissionierwagens befindlicher Lagerbehälter für das abzulegende Objekt mit einem RFID-Transponder versehen ist, wobei der RFID-Transponder mit einem Leuchtmittel gekoppelt ist, und wobei das Verfahren (500) ferner Folgendes umfasst:
Empfangen von Informationen über das abzulegende Objekt durch die Prozessierschaltung;
Ansteuern des Erregerelements mittels der Prozessierschaltung, um das magnetische Erregerfeld mit einem Befehl für den RFID-Transponder zu kodieren, so dass der RFID-Transponder das Leuchtmittel bei Empfang des Befehls aktiviert und mittels aus dem magnetischen Erregerfeld gewonnener elektrischer Energie versorgt.

13. Verfahren (500) nach Anspruch 12, ferner umfassend:
falls bestimmt wurde, dass der Kommissionierer das abzulegende Objekt in dem gewünschten Bereich des Kommissionierwagens abgelegt hat, Ansteuern des Erregerelements mittels der Prozessierschaltung, um das magnetische Erregerfeld mit einem weiteren Befehl für den RFID-Transponder zu kodieren, so dass der RFID-Transponder das Leuchtmittel bei Empfang des weiteren Befehls deaktiviert.

14. Verfahren (500) nach Anspruch 12 oder Anspruch 13, ferner umfassend:
Messen eines magnetischen Feldes von einem Regal, aus dem der Kommissionierer das abzulegende Objekt entnommen hat, mittels der Mehrzahl von am Kommissionierwagen angebrachten Sensoren, wobei das magnetische Feld mit den Informationen über das abzulegende Objekt kodiert ist.

15. Verfahren nach einem der Ansprüche 4 bis 14, wobei das Wearable zumindest eine passive Spule oder eine aktive Spule zum Ausprägen des magnetischen Antwortfelds aufgrund des magnetischen Erregerfeldes umfasst.
